# EUROPEAN PATENT SPECIFICATION

(11) **EP 2 540 548 B1**
(45) Date of publication and mention of the grant of the patent: **24.05.2017**
(21) Application number: 10846131.0
(22) Date of filing: 22.02.2010
(51) Int. Cl.: F16H 63/42, F16H 61/02

(54) **GEAR SHIFT INDICATOR FOR VEHICLE**
GANGSCHALTUNGSANZEIGER FÜR EIN FAHRZEUG
INDICATEUR DE CHANGEMENT DE VITESSE POUR VÉHICULE

(43) Date of publication of application: 02.01.2013
(73) Proprietor: TOYOTA JIDOSHA KABUSHIKI KAISHA, Toyota-shi, Aichi-ken, 471-8571 (JP)
(72) Inventor: SUGANO Kazumitsu, Toyota-shi, Aichi-ken, 471-8571 (JP); KATO Shinji, Toyota-shi, Aichi-ken, 471-8571 (JP); SHINOHARA Shuntaro, Toyota-shi, Aichi-ken, 471-8571 (JP)
(74) Representative: D Young & Co LLP
(86) International application number: PCT/JP2010/052661
(87) International publication number: WO 2011/101996

(56) References cited:
- EP-A1- 1 860 351
- JP-A- 9 088 654
- JP-A- 11 311 332
- JP-A- 2007 225 096
- JP-A- 2007 283 907
- JP-A- 2007 283 907
- JP-A- 2007 315 535
- JP-A- 2007 315 536

## Description

### TECHNICAL FIELD

The present invention relates to a gear shift indicator for a vehicle, that instructs a driver about a gear shifting operation to a proper transmission speed or proper transmission speed range of a transmission.

### BACKGROUND ART

A gear shift indicator for a vehicle is well known that instructs a driver about a gear shifting operation to a proper transmission speed serially set in a vehicle including a transmission whose transmission speed or transmission speed range (hereinafter, the transmission speed will include the concept of the transmission speed range when these two are not especially distinguished from each other) is shifted by execution of a gear shifting operation by the driver such as, for example: a manual transmission; or an automatic transmission having a manual gear shift mode. For example, each of gear shift indicators described in Patent Documents 1 to 3, etc., is the above one. For example, Patent Document 1 describes that an instruction about a gear shifting operation is indicated on a gear shifting operation instruction indicator when, for example, the optimal gear based on a gear shift line and an actual gear of a transmission are different from each other. Patent Document 1 additionally describes that the gear shift indicator: selects a fuel-efficiency-oriented mode or a safety-oriented mode based on various kinds of information including pieces of information from a car navigating apparatus and a traffic information detecting apparatus; instructs about a gear shifting operation based on the optimal gear based on the gear shift line when the fuel-efficiency-oriented mode is selected; and, on the other hand, delays the instruction about the gear shifting operation using the gear shifting operation instruction indicator when the safety-oriented mode is selected, compared to the case where the fuel-efficiency-oriented mode is selected. Patent Document 2 describes a manual gear shifting operation indicator for a vehicle, that includes both of an indication lamp indicating a gear shifting direction to realize an eco-running mode and an indication lamp indicating a gear shifting direction to realize a sport running mode.

### PRIOR ART DOCUMENTS

### Patent Documents

Patent Document 1: Japanese Laid-Open Patent Publication No. 2007-315535
Patent Document 2: Japanese Laid-Open Patent Publication No. 2007-283907
Patent Document 3: Japanese Laid-Open Patent Publication No. 2007-225096

### SUMMARY OF THE INVENTION

Aspects of the invention are defined in the appended claims.

### Problems that the Invention Is to Solve

With the gear shift indicator such as that in Patent Document 1, which discloses all the features of the preamble according to claim 1, when, for example, one of the modes is selected and an instruction is executed about the gear shifting operation matched with this mode, the driver is unable to know the information on the instruction about the gear shifting operation in the other mode. This problem is unknown. For example, it has been proposed that instructions about gear shifting operations to realize a plurality of modes are indicated as the shift indicating apparatus of Patent Document 2 does. However, in this case, a plural pairs of indication lamps are necessary, that include upshift indication lamps each indicating up shifting and downshift indication lamps each indicating down shifting. No proposal has been made to know information on instructions about gear shifting operations in a plurality of modes using only one pair of indication lamps including an upshift indication lamp and a downshift indication lamp.

The present invention was conceived in view of the above circumstances and an object thereof is to provide a gear shift indicator for a vehicle, capable of properly instructing a driver about a gear shifting operation to a proper transmission speed or transmission speed range.

### Means for Solving the Problems

According to the present invention, said object is solved by a gear shift indicator according to claims 1. Preferred embodiments are laid down in the dependent claims. The present invention provides (a) a gear shift indicator for a vehicle having a transmission whose transmission speed or transmission speed range is shifted by a gear shifting operation by the driver, said gear shift indicator instructing a driver about a gear shifting operation to a proper transmission speed or a transmission speed range serially set, including: (b) a gear shift indicating device having only one upshift indicating lamp to instruct the driver about upshifting and only one downshift indicating lamp to instruct the driver about downshifting each, (c) wherein, when an actual transmission speed or transmission speed range of the transmission and the proper transmission speed or transmission speed range are different from each other, the gear shift indicator indicates an instruction about a gear shift operation to vary the actual transmission speed or transmission speed range to the proper transmission speed or transmission speed range using only one of the two indicating lamps and (d) wherein, when only one of a first condition and a second condition different from the first condition is employed as a condition, the gear shifting operation to vary to the proper transmission speed or transmission speed range on the basis of the only one of the first condition and the second condition is instructed to the driver using a single instruction method, while when the first condition and the second condition are both employed as conditions, the gear shifting operation to vary each to the proper transmission speed or transmission speed range on the basis of each of the first condition and the second condition is instructed to the driver using each instruction method different from each other and based on the two different conditions using only one of the two indicating lamps.

### The Effects of the Invention

Consequently, in the case where the first condition and the second condition are both employed as conditions, the gear shifting operation to vary each to the proper transmission speed or transmission speed range on the basis of each of the first condition and the second condition is instructed to the driver using each instruction method different from each other using only the pair of indicating lamps and, therefore, the gear shifting instructions are executed based on the two different conditions. That is, only with a gear shift indicating device having only one upshift indicating lamp and only one downshift indicating lamp each, without, for example, switching the condition setting, the gear shifting operation to the proper transmission speed in the case satisfying the first condition and the gear shifting operation to the proper transmission speed in the case satisfying the second condition can be properly instructed to the driver, respectively, in the different indicating method (manner) using the pair of gear shift indicating devices.

Preferably, the first condition and the second condition are both conditions to instruct upshifting or are both conditions to instruct downshifting. Consequently, the instruction about the gear shifting operation to be executed when the first condition is satisfied and the instruction about the gear shifting operation to be executed when the second condition is satisfied are both presented to the driver for instructing about gear shifting operations of the same kind.

Preferably, the second condition is a gear shift condition to select, based on a running state of the vehicle, as the proper transmission speed or transmission speed range, a transmission speed or a transmission speed range set in advance such that a transmission speed or a transmission speed range on a low gear ratio side tends to be selected compared to the proper transmission speed or transmission speed range selected based on the first condition. Consequently, such instructions are both presented to the driver as: an instruction about the gear shifting operation to the proper transmission speed or transmission speed range selected based on the first condition; and an instruction about the gear shifting operation to the proper transmission speed or transmission speed range selected based on the running state of the vehicle from the transmission speeds or the transmission speed range set in advance such that the transmission speed or the transmission speed range on the low gear ratio side tends to be selected.

Preferably, one condition of the first condition and the second condition is a normal gear shift condition to select, based on a running state of the vehicle, as the proper transmission speed or transmission speed range, a transmission speed or a transmission speed range set in advance such that driving is enabled with high fuel efficiency and motive power performance of the vehicle fully extracted when an eco mode is selected, and wherein the other condition of the first condition and the second condition is a fuel-efficiency-prioritized gear shift condition to select, based on a running state of the vehicle, as the proper transmission speed or transmission speed range, a transmission speed or a transmission speed range set in advance such that fuel efficiency performance is prioritized to motive power performance when the eco mode is selected. Consequently, for example, in the case where the eco mode is selected, such instructions are both presented to the driver as: an instruction about the gear shifting operation to be executed when the normal gear shift condition is satisfied; and an instruction about the gear shifting operation to be executed when the fuel-efficiency-prioritized gear shift condition is satisfied.

Preferably, an instruction method is used of instructing the driver about the gear shifting operation based on the normal gear shift condition in a running state satisfying the normal gear shift condition only employing the normal gear shift condition as a condition when the eco mode is not selected, and wherein when the eco mode is selected, employing both of the normal gear shift condition and the fuel-efficiency-prioritized gear shift condition as conditions, such instruction methods are used, as an instruction method of instructing the driver about the gear shifting operation based on the normal gear shift condition in a running state satisfying the normal gear shift condition, and an instruction method of instructing the driver about the gear shifting operation based on the fuel-efficiency-prioritized gear shift condition using an instruction about the gear shifting operation different from that used when the normal gear shift condition is satisfied, in a running state satisfying the fuel-efficiency-prioritized gear shift condition. Consequently, for example, when the eco mode is selected, such instructions are presented to the driver clearly distinguished from each other, as an instruction about the gear shifting operation to be executed when the normal gear shift condition is satisfied and an instruction about the gear shifting operation to be executed when the fuel-efficiency-prioritized gear shift condition is satisfied.

Preferably, one condition of the first condition and the second condition is a normal gear shift condition to select, based on a running state of the vehicle, as the proper transmission speed or transmission speed range, a transmission speed or a transmission speed range set in advance such that driving is enabled with high fuel efficiency and motive power performance of the vehicle fully extracted when a power mode is selected, and wherein the other condition of the first condition and the second condition is a motive-power-prioritized gear shift condition to select, based on a running state of the vehicle, as the proper transmission speed or transmission speed range, a transmission speed or a transmission speed range set in advance such that the motive power performance is prioritized to fuel efficiency performance when the power mode is selected. Consequently, for example, when the power mode is selected, such instructions are both presented to the driver as an instruction about the gear shifting operation to be executed when the normal gear shift condition is satisfied and an instruction about the gear shifting operation to be executed when the motive-power-prioritized gear shift condition is satisfied.

Preferably, an instruction method is used of instructing the driver about the gear shifting operation based on the normal gear shift condition in a running state satisfying the normal gear shift condition employing only the normal gear shift condition as a condition when the power mode is not selected, and wherein when the power mode is selected, employing both of the normal gear shift condition and the motive-power-prioritized gear shift condition as conditions, such instruction methods are used as, an instruction method of instructing the driver about the gear shifting operation based on the normal gear shift condition in a running state satisfying the normal gear shift condition, and an instruction method of instructing the driver about the gear shifting operation based on the motive-power-prioritized gear shift condition using an instruction about the gear shifting operation different from that used when the normal gear shift condition is satisfied, in a running state satisfying the motive-power-prioritized gear shift condition. Consequently, for example, when the power mode is selected, such instructions are presented to the driver clearly distinguished from each other, as an instruction about the gear shifting operation to be executed when the normal gear shift condition is satisfied and an instruction about the gear shifting operation to be executed when the motive-power-prioritized gear shift condition is satisfied.

Preferably, the first condition is a gear shift condition to select the proper transmission speed or transmission speed range based on a running state of the vehicle from a relation stored in advance, and wherein the second condition is a gear shift condition to select the proper transmission speed or transmission speed range based on information on a road to run for the vehicle. Consequently, such instructions are both presented to the driver as an instruction about the gear shifting operation to the proper transmission speed or transmission speed range selected based on the running state of the vehicle from the relation stored in advance and an instruction about the gear shifting operation to the proper transmission speed or transmission speed range selected based on information on a road to run for the vehicle.

Preferably, the information on a road to run for the vehicle is information on an uphill or a downhill, and wherein the second condition is a gear shift condition to select as the proper transmission speed or transmission speed range a transmission speed or a transmission speed range set in advance to be suitable for running on the uphill or the downhill. Consequently, for example, when the vehicle is running on an uphill or a downhill, such instructions are both presented to the driver as an instruction about the gear shifting operation to the proper transmission speed or transmission speed range selected based on the running state of the vehicle from the relation stored in advance and an instruction about the gear shifting operation to the proper transmission speed or transmission speed range selected based on the information on the uphill or the downhill to be suitable for running on the uphill or the downhill.

Preferably, the information on a road to run for the vehicle is information on a road to run from a navigation system mounted on the vehicle, and wherein the second condition is a gear shift condition to select as the proper transmission speed or transmission speed range a transmission speed or a transmission speed range set in advance to be suitable for running on the road to run acquired from the navigation system. Consequently, for example, when the vehicle is running on the road to run acquired from the navigation system, such instructions are both presented to the driver as an instruction about the gear shifting operation to the proper transmission speed or transmission speed range selected based on the running state of the vehicle from the relation stored in advance and an instruction about the gear shifting operation to the proper transmission speed or transmission speed range selected based on the information on the road to run from the navigation system mounted on the vehicle to be suitable for running on the road to run acquired from the navigation system.

Preferably, an instruction method of instructing the driver about the gear shifting operation based on the second condition in a running state satisfying the second condition is an instruction method of instructing the driver about the gear shifting operation using an instruction about a gear shifting operation more strongly urging the driver to execute the gear shifting operation compared to the instruction about the gear shifting operation in the instruction method of instructing the driver about the gear shifting operation based on the first condition in a running state satisfying the first condition. Consequently, such instructions are presented to the driver clearly distinguished from each other, as an instruction about the gear shifting operation when the first condition is satisfied and an instruction about the gear shifting operation when the second condition is satisfied.

Preferably, the first condition is a gear shift condition to select the proper transmission speed or transmission speed range based on a running state of the vehicle from a relation stored in advance, and wherein the second condition is a gear shift condition to select the proper transmission speed or transmission speed range based on information to protect an apparatus mounted on the vehicle and engaged in running of the vehicle. Consequently, such instructions are both presented to the driver as an instruction about the gear shifting operation to the proper transmission speed or transmission speed range selected based on a running state of the vehicle from the relation stored in advance and an instruction about the gear shifting operation to the proper transmission speed or transmission speed range selected based on the information to protect an apparatus mounted on the vehicle and engaged in running of the vehicle.

Preferably, the information to protect the apparatus engaged in running of the vehicle is information on an actuating oil temperature of the transmission, and wherein the second condition is a gear shift condition to select as the proper transmission speed or transmission speed range a transmission speed or a transmission speed range set in advance to decrease the actuating oil temperature to a temperature lower than a predetermined high oil temperature set in advance. Consequently, for example, when the actuating oil temperature is equal to the predetermined high oil temperature, such instructions are both presented to the driver as an instruction about the gear shifting operation to the proper transmission speed or transmission speed range selected based on the running state of the vehicle from a relation stored in advance and an instruction about the gear shifting operation to the proper transmission speed or transmission speed range selected based on the information on the actuating oil temperature of the transmission to decrease the actuating oil temperature to a temperature lower than a predetermined high oil temperature set in advance.

Preferably, the information to protect the apparatus engaged in running of the vehicle is information on an engine rotation speed, and wherein the second condition is a gear shift condition to select as the proper transmission speed or transmission speed range a transmission speed or a transmission speed range set in advance to prevent the engine rotation speed from increasing to a predetermined excessive rotation speed set in advance. Consequently, for example, when the engine rotation speed is equal to the excessive rotation speed, such instructions are both presented to the driver as an instruction about the gear shifting operation to the proper transmission speed or transmission speed range selected based on the running state of the vehicle from a relation stored in advance and an instruction about the gear shifting operation to the proper transmission speed or transmission speed range selected based on the information on the engine rotation speed to prevent the engine rotation speed from increasing to a predetermined excessive rotation speed set in advance.

Preferably, an instruction method of instructing the driver about the gear shifting operation based on the second condition in a running state satisfying the second condition is an instruction method of instructing the driver about the gear shifting operation using an instruction about a gear shifting operation more strongly urging the driver to execute the gear shifting operation compared to the instruction about the gear shifting operation in the instruction method of instructing the driver about the gear shifting operation based on the first condition in a running state satisfying the first condition. Consequently, such instructions are presented to the driver clearly distinguished from each other, as an instruction about the gear shifting operation when the first condition is satisfied and an instruction about the gear shifting operation when the second condition is satisfied.

Preferably, the vehicle is adapted to transmit the motive power of the driving power source to the driving wheels through the transmission. The transmission is, for example: a manual transmission with which gear shifting is executed by a gear shifting operation by the driver; an automatic transmission that has known manual gear shift modes and with which the transmission speed or the transmission speed range is able to be shifted by a gear shifting operation by the driver; etc. The manual transmission is configured by, for example, a synchronized-intermeshing parallel-two-shaft manual transmission that includes between its two shafts a plural pairs of transmission gears always intermeshing with each other and that selectively sets using a synchronizing apparatus any one pair of the plural pairs of transmission gears to be in a motive power transmission state. The automatic transmission is configured by, for example: a known planetary gear automatic transmission having a plurality of transmission speeds; a synchronized-intermeshing parallel-two-shaft automatic transmission that is a type of the synchronized-intermeshing parallel-two-shaft transmission while whose transmission speed is able to be automatically shifted by a synchronizing apparatus driven by an oil-pressure actuator; a what-is-called DCT (Dual Clutch Transmission) that is a type of the synchronized-intermeshing parallel-two-shaft automatic transmission while that is a type of transmission including two systems each of an input shaft, having each of the input shafts of the systems connected to a clutch, and having one input shaft further coupled to gears of even-numbered transmission speeds and the other to gears of odd-numbered transmission speeds; a what-is-called belt-type continuously variable transmission that has a driving belt wound on a pair of variable-speed pulleys and that is thereby able to continuously vary its transmission gear ratio in a step-less form; a what-is-called traction-type continuously variable transmission including a pair of cones rotated about a common shaft center and a plurality of rollers rotatable about a rotation center crossing the shaft center, that are sandwiched and pressed between the pair of cones, enabling the transmission ratio to vary by varying the crossing angle of the rotation center of the rollers and the shaft center; an automatic transmission functioning as an electric continuous variable transmission that includes a differential mechanism configured by, for example, a planetary gear apparatus distributing the motive power from the engine to a first electric motor and an output shaft and a second electric motor disposed on the output shaft of the differential mechanism and that electrically varies its transmission gear ratio by mechanically transmitting the main portion of the motive power from the engine to a driving wheels using the differential action of the differential mechanism and by electrically transmitting the rest of the motive power from the engine, from the first electric motor to the second electric motor using an electric path; or an automatic transmission mounted on a what-is-called parallel-type hybrid vehicle that includes an electric motor capable of transmitting the motive power to the engine shaft, the output shaft, etc. For example, an internal combustion engine that generates the motive power using combustion of fuel such as a gasoline engine, a diesel engine, etc., is advantageously used as the driving power source. However, another driving motor such as an electric motor may be employed alone or in combination with an engine.

### BRIEF DESCRIPTION OF THE DRAWINGS

Fig. 1 is a diagram for explaining a schematic configuration of a motive power transmitting path that constitutes a vehicle to which the present invention is applicable, and an example of the purview of a control system installed in the vehicle.
Fig. 2 is a diagram for depicting an example of an indicator including a gear shift indicating device.
Fig. 3 is a functional block line diagram for explaining the purview of a control function by the electronic control apparatus.
Fig. 4 is a diagram for depicting an example of the normal running gear shift line diagram used for the gear shifting of the automatic transmission in the normal mode.
Fig. 5 is a diagram for depicting an example of the sport running gear shift line diagram used for the gear shifting of the automatic transmission in the sport mode (power mode).
Fig. 6 is a diagram for depicting an example of the eco running gear shift line diagram used for the gear shifting of the automatic transmission in the eco mode.
Fig. 7 is a diagram for depicting an example of the actual transmission speed calculation map used when an actual transmission speed is calculated.
Fig. 8 is a flowchart for explaining the purview of control actions of the electronic control apparatus, that is, control actions to properly instruct the driver about the gear shifting operation to a proper transmission speed.
Fig. 9 is a diagram for exemplifying gear shift indicating devices that are different from the gear shift indicating device depicted in Fig. 2, etc.

### BEST MODES FOR CARRYING OUT THE INVENTION

Embodiments of the present invention will now be described in detail with reference to the accompanying drawings.

### First Embodiment

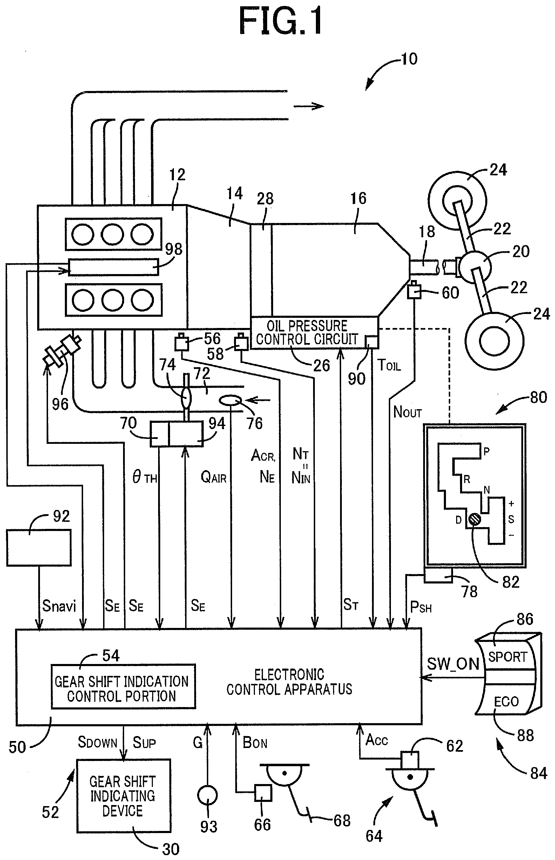

Fig. 1 is a diagram for explaining a schematic configuration of a motive power transmitting path from an engine 12 to driving wheels 24 that constitute a vehicle 10 to which the present invention is applicable, and is also a diagram for explaining the purview of a control system installed in the vehicle 10 to: control an output of the engine 12; control the gear shifting of an automatic transmission 16; etc. In Fig. 1, the automatic transmission 16 is operably connected to a crank shaft of the engine 12 as a driving power source for running through a torque converter 14, in a transmission case as a non-rotatable member attached to a vehicle body. Motive power generated by the engine 12 is input into the automatic transmission 16 through the torque converter 14, and is transmitted from an output shaft 18 of the automatic transmission 16 to the right and left driving wheels 24 sequentially through: a differential gear apparatus (differential gear) 20; a pair of wheel shafts (driving shafts) 22; etc.

The automatic transmission 16 is, for example, a stepwise automatic transmission whose one of a plurality of transmission speeds (transmission gear) is selectively established, that is, shifted, and decreases or increases rotations input thereinto at a predetermined transmission gear ratio γ and outputs the resultant rotations. For example, the automatic transmission 16 is a planetary gear automatic transmission whose plurality of transmission speeds are configured by combinations of actuations of oil pressure friction engaging apparatuses such as a clutch or a brake engaged by oil pressure actuators. Each of the oil pressure friction engaging apparatuses of the automatic transmission 16 is controlled by, for example, an oil pressure control circuit 26 employing a line oil pressure PL as the main pressure. The line oil pressure PL: is a pressure adjusted using as the main pressure an oil pressure generated from a mechanical oil pump 28 mechanically connected to the engine 12 and directly driven and rotated by the engine 12; and is the highest engagement pressure used to engage each of the oil pressure friction engaging apparatuses of the automatic transmission 16 with each other.

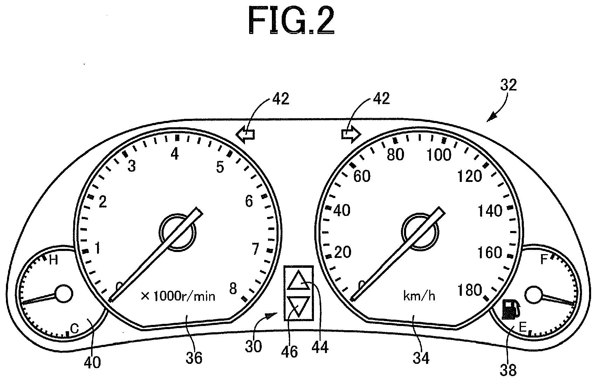

A gear shift indicating device 30 is disposed in the vicinity of a driver's seat to indicate an instruction about a gear shifting operation to a driver. Fig. 2 is a diagram of an indicator 32 including this gear shift indicating device 30. As depicted in Fig. 2, the indicator 32 includes, in addition to the gear shift indicating device 30, a speed indicator (speedometer) 34 that indicates the vehicle speed V [km/h], a rotation speed indicator (tachometer) 36 that indicates the engine rotation speed N_{E} [rpm], a fuel indicator 38, a water temperature meter 40, a pair of turn signal actuation indicating lamps 42 on the right and the left, etc.

The gear shift indicating device 30 includes, for example, an upshift indicating lamp 44 to instruct the driver about upshifting and a downshift indicating lamp 46 to instruct the driver about downshifting. The upshift indicating lamp 44: has, for example, a triangle shape whose one angle is oriented upward when the lamp 44 is seen from the driver, that is, upward of the page of Fig. 2; and is turned on (or caused to flicker) in response to supply of an upshift instruction signal S_{UP} from an electronic control apparatus 50 described later. The downshift indicating lamp 46: has, for example, a triangle shape whose one angle is oriented downward when the lamp 46 is seen from the driver, that is, downward of the page of Fig. 2; and is turned on (or caused to flicker) in response to supply of a downshift instruction signal S_{DOWN} from the electronic control apparatus 50. The upshift indicating lamp 44 and the downshift indicating lamp 46 each indicate using a semiconductor element that emits light when a current flows therein, that is, a light emitting diode (LED). When the upshift indicating lamp 44 and the downshift indicating lamp 46 are both turned off, this means that the lamps 44 and 46 instruct the driver to maintain the current transmission speed.

Returning back to Fig. 1, the vehicle 10 includes, for example, an electronic control apparatus 50 that includes a gear shift indicator (GSI) 52 for a vehicle (hereinafter, referred to as "gear shift indicator 52") including the gear shift indicating device 30 and to instruct the driver about a gear shifting operation to a proper (the optimal) transmission speed serially set (selected) such as, for example, a proper (the optimal) transmission speed serially set (selected) based on the running state of the vehicle 10 (or various kinds of information on the vehicle) from a relation stored in advance (or from transmission speeds set in advance). The electronic control apparatus 50 includes a what-is-called micro computer that includes, for example, a CPU, a RAM, a ROM, and an interface for input and output. The CPU executes various kinds of control of the vehicle 10 by using a temporary storage function of the RAM and executing signal processing according to a program stored in advance in the ROM. For example, the electronic control apparatus 50 executes: control of the output of the engine 14; control of gear shift indication to control turning on (or flickering) of the upshift indicating lamp 44 and the downshift indicating lamp 46 of the gear shift indicating device 30; etc., The electronic control apparatus 50 as necessary is divided into and configured by a control portion for controlling the output of the engine 14, a gear shift indication control portion 54 for controlling the gear shift indication of the gear shift indicating device 30, etc. The gear shift indicator 52: includes, for example, the gear shift indicating device 30 and the gear shift indication control portion 54; and indicates an instruction about a gear shifting operation to shift an actual transmission speed (transmission gear), that is, an actual transmission speed G_{REAL} to a requirement transmission speed (target transmission speed) G_{REQ} calculated based on the vehicle condition.

As depicted in Fig. 1, the electronic control apparatus 50 is supplied with signals such as, for example: a crank shaft rotation speed signal indicating a crank angle (position) A_{CR} and an engine rotation speed N_{E} detected by a crank position sensor 56; a turbine rotation speed signal (input rotation speed signal) indicating a turbine rotation speed N_{T} of the torque converter 14 detected by a turbine rotation speed sensor 58, that is, an input rotation speed N_{IN} of the automatic transmission 16; a vehicle speed signal indicating an output shaft rotation speed N_{OUT} of the output shaft 18 corresponding to the vehicle speed V detected by an output shaft rotation speed sensor 60; an accelerator pedal opening angle signal indicating an accelerator pedal opening angle A_{CC} that is the amount of operation of an accelerator pedal 64 detected by an accelerator pedal opening angle sensor 62; a brake operation signal indicating brake ON B_{ON} representing the state where a foot brake 68 is operated that is a usually used brake, detected by a brake switch 66; a throttle valve opening angle signal indicating a throttle valve opening angle θ_{TH} that is the opening angle of an electronic throttle valve 74 disposed on an intake pipe 72, detected by a throttle position sensor 70; an intake air amount signal indicating an intake air amount Q_{AIR} of the engine 12 detected by an intake air amount sensor 76; a shift operation position signal indicating a lever position (a shift operation position, a shift position, an operation position) P_{SH} of a shift lever 82 in a shift operating apparatus 80 detected by a shift position sensor 78; a sport mode switch signal indicating a sport mode ON SW_ON representing the state where a sport mode (that is, power mode) switch 86 of a running mode selection switch 84 is switched on by an operation of the driver; an eco mode switch signal indicating an eco mode ON SW_ON representing the state where an eco mode switch 88 of the running mode selection switch 84 is switched on by an operation of the driver; an actuating oil temperature signal indicating an actuating oil temperature T_{OIL} that is the temperature of the actuating oil of the automatic transmission 16 detected by an oil temperature sensor 90 disposed inside the oil pressure control circuit 26; a car navigation information signal indicating information Snavi on the road to run from a navigation system 92 mounted on the vehicle 10; and an acceleration signal indicating a forward or a backward acceleration (vehicle acceleration) G of the vehicle 10 detected by an acceleration sensor 93.

Such signals are output from the electronic control apparatus 50 as, for example: a driving signal to a throttle actuator 94 to operate the throttle valve opening angle θ_{TH} of the electronic throttle valve 74; an injection signal to control the amount of fuel injected from a fuel injecting apparatus 96; and an ignition timing signal to control the ignition timing of the engine 12 by an ignition device 98, as an engine output control order signal S_{E} to control the output of the engine 12. Such signals are output to the gear shift indicating device 30 as, for example: an upshift indication signal S_{UP} to turn on (or cause to flicker) the upshift indicating lamp 44 and a downshift indication signal S_{DOWN} to turn on (or cause to flicker) the downshift indicating lamp 46 as gear shift operation indication signals to instruct the driver about gear shifting operations. Such signals are output to the oil pressure control circuit 26 as, for example: a valve order signal to control magnetic excitation or magnetic non-excitation of a solenoid valve in the oil pressure control circuit 26; and a line oil pressure control order signal to drive a linear solenoid valve that adjusts the pressure of the line oil pressure PL, as gear shift control order signal S_{T} to shift the transmission speed of the automatic transmission 16. The pressure of the line oil pressure PL is adapted to be adjusted to a value corresponding to an engine load (an output torque from the engine 12 (an engine torque T_{E})) based on a control oil pressure that is an output oil pressure of the linear solenoid valve by, for example, a relief-type primary regulator valve (line oil pressure adjusting valve), using as the main pressure the actuating oil pressure output (generated) from the mechanical oil pump 28 driven and rotated by the engine 12.

The shift operating apparatus 80 is disposed, for example, beside the driver's seat and is used for the automatic transmission 16 having the manual gear shift mode with which the transmission speed is able to be shifted by execution of a gear shifting operation by the driver as a gear shifting apparatus whose plural kinds of lever positions P_{SH} are shifted by a human operation. The shift operating apparatus 80 includes the shift lever 82 that is operated to select one of the plural kinds of lever positions P_{SH}.

The shift lever 82 is provided to be manually operated to set any one of the lever positions P_{SH} that are, for example: a parking position "P (Parking)" to establish the neutral state (neutralized state) where the motive power transmission path in the automatic transmission 16 is released, that is, where the motive power transmission in the automatic transmission 16 is blocked and to mechanically block (lock) the rotation of the output shaft 18 by a mechanical parking mechanism; a reverse running position "R (Reverse)" for reverse running by setting the rotation direction of the output shaft 18 of the automatic transmission 16 to be the reverse rotation direction; a neutral position "N (Neutral)" to establish the neutral state where the motive power transmission in the automatic transmission 16 is discontinued; a forward automatic gear shift running position "D (Drive)" to cause the automatic gear shifting control to be executed using all the forward transmission speeds in a transmission speed range (D range) within which the automatic transmission 16 is able to vary the speed; and a forward manual gear shift running position "S" to establish a plural kinds of transmission speed ranges to limit the variation ranges of the transmission speeds, that is, a manual gear shift mode ("S" or "M" mode) and to set a plural kinds of transmission speed ranges whose transmission speeds on the high-speed side (high vehicle speed side, high gear ratio side) capable of being shifted by the automatic gear shift control (i.e., manual ranges in which use of the high-speed side transmission speeds are prohibited.) are different from those of each other.

Of the lever positions P_{SH} described for the "P" to the "S" positions, the "P" and the "N" positions are non-running positions that are selected when the vehicle is not caused to run, and are non-driving positions to select shifting to the motive power transmission blocked state of the motive power transmission path to unable the vehicle 10 to be driven. The "R", the "D", and the "S" positions are running positions that are selected when the vehicle 10 is caused to run, and are also driving positions to select shifting to the motive power transmission state of the motive power transmission path to enable the vehicle 10 to be driven.

Especially, the "S" position is disposed, for example, adjacent to the "D" position in the lateral direction of the vehicle 10 at the same position as that of the "D" position in the front-back direction of the vehicle 10. When the shift lever 82 is operated to be set at the "S" position, any one of the "D" range to an "L" range is thereby changed in response to the operation of the shift lever 82. More specifically, the "S" position has in the front-back direction of the vehicle 10 a "+" position as the lever position P_{SH} to shift the gear shift range upward for each operation of the shift lever 82 and a "-" position as the lever position P_{SH} to shift the gear shift range downward for each operation of the shift lever 82. For example, when the shift lever 82 is operated to be set at the upshift position "+" or the downshift position "-" thereof, the range is shifted to any one of the "D" range to the "L" range in response to the operation. Thereby, the range is shifted to a desired shift range based on the operation by the user of the shift lever 82. For example, the plurality of shift ranges of the "D" range to the "L" range at the "S" position are: a plural kinds of shift range whose transmission speeds or transmission gear ratios on the high speed side (on the side of the smallest transmission gear ratio) are different from each other in the variation range of the transmission speeds or the transmission gear ratios within which the automatic gear shift control of the automatic transmission is enabled; and limit the gear shift ranges of the transmission speeds such that the transmission speeds are different among the shift ranges on the highest speed side with which the automatic transmission is able to shift the gears.

The running mode selection switch 84 is disposed, for example, in the vicinity of the shift operating apparatus 80 and includes the sport mode switch 86 and the eco mode switch 88 as switching apparatuses switching among the plural kinds of running modes by a manual operation. The sport mode switch 86 is, for example, a switch to select the what-is-called sport mode to run in a predetermined gear shift control mode set in advance that is more suitable for sport running than the normal running (that is, when a normal mode is selected). The eco mode switch 88 is, for example, a switch to select the what-is-called eco mode to run in a predetermined gear shift control mode set in advance that is more suitable for eco running that more strongly emphasizes reduction of fuel consumption than the normal running. The running mode selection switch 84: is, for example, a seesaw switch; enables the user to select the vehicle running in a running mode desired by the user; and causes the sport mode or the eco mode to be selected (set) when the sport mode switch 86 or the eco mode switch 88 is pressed by the user. When none of the sport mode switch 86 and the eco mode switch 88 is pressed, the what-is-called normal mode is selected (set) that is a gear shift control mode set in advance for the normal running of the vehicle to be executed.

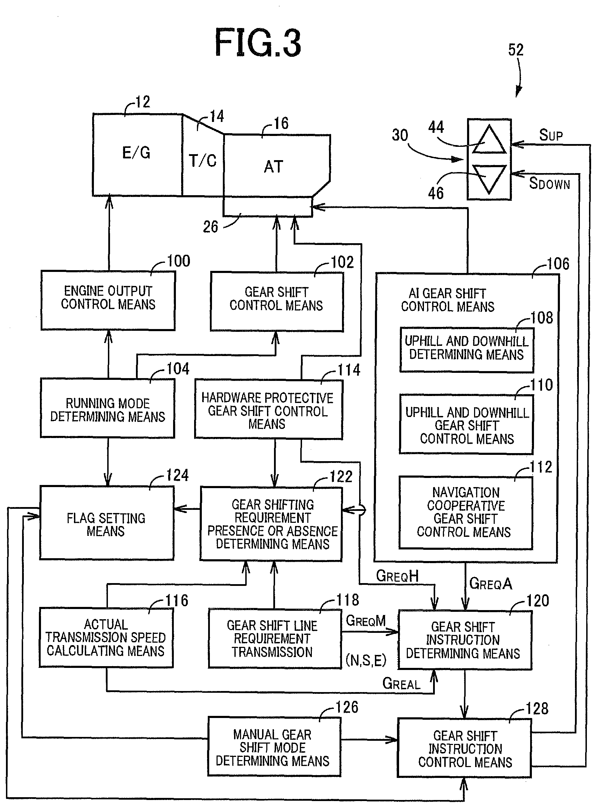

Fig. 3 is a functional block line diagram for explaining the purview of a control function by the electronic control apparatus 50. In Fig. 3, an engine output control portion, that is, an engine output control means 100, for example, controls opening and closing of the electronic throttle valve 74 using a throttle actuator 94 to control the throttle, in addition, controls the amount of fuel injected by the fuel injecting apparatus 96 to control the amount of fuel injected, and outputs the engine output control order signal S_{E} to control an igniting apparatus 98 such as an igniter to control the ignition timings. For example, the engine output control means 100 controls the opening and the closing of the electronic throttle valve 74 to acquire the throttle valve opening angle θ_{TH} that is increased as the accelerator pedal opening angle A_{CC} becomes larger based on the accelerator pedal opening angle A_{CC} that corresponds to the amount demanded by the driver.

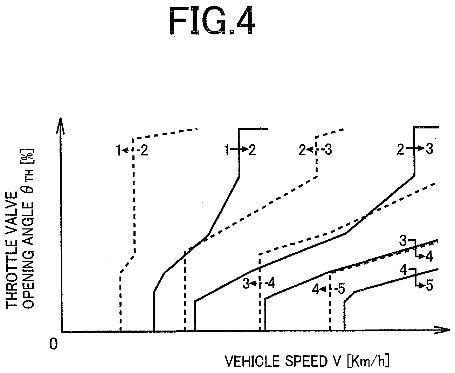

A gear shift control portion, that is, a gear shift control means 102, for example, determines gear shifting based on the running state of the vehicle 10 indicated by the actual vehicle speed V and the throttle valve opening angle θ_{TH} from the relation (a gear shift map, a gear shift line diagram) stored in advance using the vehicle speed V and the throttle valve opening angle θ_{TH} as its variables, as depicted in Fig. 4 and, thereby, determines whether gear shifting of the automatic transmission 16 must be executed. The gear shift control means 102 determines a transmission gear to be shifted to of the automatic transmission 16, and outputs the gear shift control order signal S_{T} to execute the automatic gear shift control of the automatic transmission 16 to acquire the transmission gear determined.

In the gear shift line diagram of Fig. 4, a solid line is a gear shift line (upshift line) for upshifting to be determined and a dotted line is a gear shift line (downshift line) for downshifting to be determined, and Fig. 4 is a gear shift map for, for example, the case where the automatic transmission 16 is an automatic transmission having five forward transmission speeds. The gear shift lines in the gear shift line diagram of Fig. 4 are each used to determine, for example, whether, on a lateral line representing an actual throttle valve opening angle θ_{TH} (%), the actual vehicle speed V crosses the line, that is, whether the actual vehicle speed V exceeds a value (gear shift point vehicle speed) VS for the gear shift to be executed on the gear shift line. The gear shift lines also are stored in advance as a series of the values VS, that is, the gear shift point vehicle speeds. The gear shift line diagram is experimentally acquired and set in advance to enable the driving with high fuel efficiency and the motive power performance of the vehicle 10 fully extracted, that is, to enable the driving at a transmission speed that establishes both of the fuel efficiency performance and the running performance (motive power performance).

A running mode determining portion, that is, a running mode determining means 104 determines, for example, whether the sport mode ON SW_ON is output. The running mode determining means 104 determines, for example, whether the eco mode ON SW_ON is output. The running mode determining means 104 determines, for example, a running mode selected by the running mode selection switch 84. More specifically, the running mode determining means 104 determines whether the sport mode is selected, based on whether the sport mode ON SW_ON is output. The running mode determining means 104 determines whether the eco mode is selected, based on whether the eco mode ON SW_ON is output. The running mode determining means 104: determines that, when the sport mode ON SW_ON is output, the sport mode is selected; determines that, when the eco mode ON SW_ON is output, the eco mode is selected; and determines that, when none of the sport mode ON SW_ON and the eco mode ON SW_ON is output, the normal mode is selected.

When the running mode determining means 104 determines that the sport mode is selected, the engine output control means 100 controls the throttle valve opening angle θ_{TH} to, for example, enhance the responsiveness to an operation of the accelerator pedal by the driver compared to that in the normal mode. On the other hand, when the running mode determining means 104 determines that the eco mode is selected, the engine output control means 100 controls the throttle valve opening angle θ_{TH}, for example, for the driving power corresponding to the accelerator pedal opening angle A_{CC} to become mild to improve the practical fuel efficiency compared to that in the normal mode.

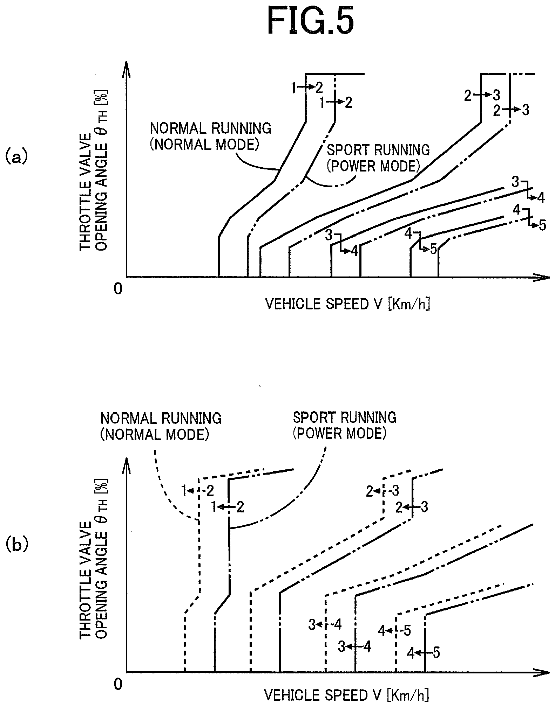

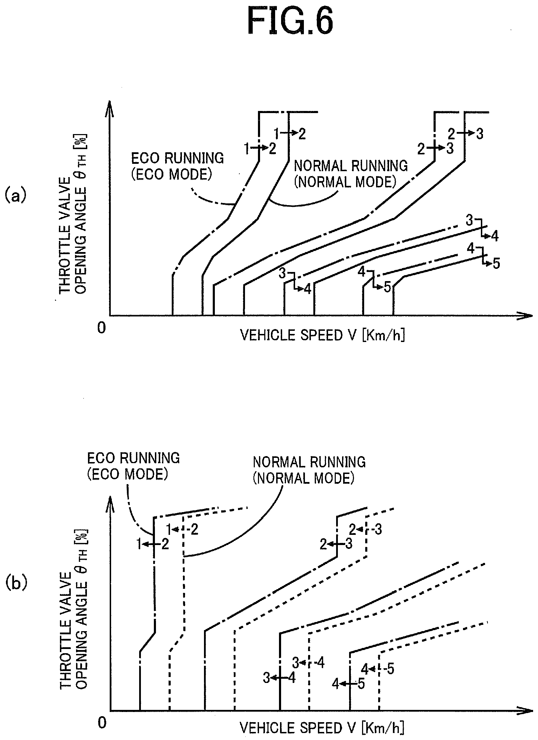

When the running mode determining means 104 determines that the normal mode is selected, the gear shift control means 102 determines whether the gear shifting of the automatic transmission 16 must be executed from the gear shift line diagram as depicted in Fig. 4. On the other hand, when the running mode determining means 104 determines that the sport mode is selected, the gear shift control means 102 determines whether the gear shifting of the automatic transmission 16 must be executed from, for example, the relation (sport running gear shift map, sport running gear shift line diagram) as depicted in Fig. 5 stored in advance such that a transmission speed on the low vehicle speed side (low gear ratio side) relatively tends to be determined (selected) compared to the normal running gear shift line diagram (normal running gear shift map) used in the normal mode as depicted in Fig. 4. On the other hand, when the running mode determining means 104 determines that the eco mode is selected, the gear shift control means 102 determines whether the gear shifting of the automatic transmission 16 must be executed from, for example, the relation (eco running gear shift map, eco running gear shift line diagram) as depicted in Fig. 6 stored in advance such that a transmission speed on the high vehicle speed side (high gear ratio side) relatively tends to be determined (selected) compared to the normal running gear shift line diagram used in the normal mode as depicted in Fig. 4.

In the gear shift line diagram of Fig. 5(a), upshift lines each depicted by a solid line are normal running upshift lines depicted in, for example, Fig. 4 used in the normal mode and upshift lines each depicted by a two-dot chain line are sport running upshift lines used when it is determined that the sport mode is selected. As depicted in Fig. 5(a), the sport running upshift lines (two-dot chain lines) are set in advance, independently from the normal running upshift lines (solid lines), at positions as if the normal running upshift lines are shifted rightward (to the high vehicle speed side) to these positions such that, for example, upshifting is determined in a region for the vehicle speed V to be higher and in a region for the throttle valve opening angle θ_{TH} to be smaller, that is, the determination of the upshifting is delayed, compared to that according to the normal running upshift lines. In the gear shift line diagram of Fig. 5(b), downshift lines each depicted by a doted line are the normal running downshift lines depicted in, for example, Fig. 4 used in the normal mode and downshift lines each depicted by a two-dot chain line are sport running downshift lines used when it is determined that the sport mode is selected. As depicted in Fig. 5(b), the sport running downshift lines (two-dot chain lines) are set in advance, independently from the normal running downshift lines, at positions as if the normal running downshift lines (dotted lines) are shifted rightward (to the high vehicle speed side) to these positions such that, for example, downshifting is determined in a region for the vehicle speed V to be higher and in a region for the throttle valve opening angle θ_{TH} to be smaller, that is, the determination of the downshifting is made earlier, compared to that according to the normal running downshift lines.

In the gear shift line diagram of Fig. 6(a), upshift lines each depicted by a solid line are normal running upshift lines depicted in, for example, Fig. 4 used in the normal mode and upshift lines each depicted by a one-dot chain line are eco-running upshift lines used when it is determined that the eco mode is selected. As depicted in Fig. 6(a), the eco-running upshift lines (one-dot chain lines) are set in advance, independently from the normal running upshift lines (solid lines), at positions as if the normal running upshift lines are shifted leftward (to the low vehicle speed side) to these positions such that, for example, upshifting is determined in a region for the vehicle speed V to be lower and in a region for the throttle valve opening angle θ_{TH} to be larger, that is, the determination of the upshifting is made earlier, compared to that according to the normal running upshift lines. In the gear shift line diagram of Fig. 6(b), downshift lines each depicted by a doted line are the normal running downshift lines depicted in, for example, Fig. 4 used in the normal mode and downshift lines each depicted by a one-dot chain line are eco running downshift lines used when it is determined that the eco mode is selected. As depicted in Fig. 6(b), the eco running downshift lines (one-dot chain lines) are set in advance, independently from the normal running downshift lines, at positions as if the normal running downshift lines (dotted lines) are shifted leftward (to the low vehicle speed side) to these positions such that, for example, downshifting is determined in a region for the vehicle speed V to be lower and in a region for the throttle valve opening angle θ_{TH} to be larger, that is, the determination of the downshifting is delayed, compared to that according to the normal running downshift lines.

In the embodiment, when conditions for gear shifting are divided based on the difference in the gear shift map used for determining the gear shifting such as, for example, when conditions for gear shifting are divided based on the difference between the normal running gear shift line diagram and the sport running gear shift line diagram, or the difference between the normal running gear shift line diagram and the eco running gear shift line diagram, a condition for instructing upshifting in both cases and a condition for instructing downshifting in both cases are employed as "first condition SH" and "second condition SH" The first condition SH and the second condition SH are set in gear shifting sessions of the same kind. More specifically, one is employed as "first condition UP" and the other is employed as "second condition UP" of a condition for gear shifting based on the normal running upshift lines and a condition for gear shifting based on the sport running upshift lines. Otherwise, one is employed as "first condition UP" and the other is employed as "second condition UP" of a gear shift condition based on the normal running upshift lines and a gear shift condition based on the eco running upshift lines. One is employed as "first condition DN" and the other is employed as "second condition DN" of a gear shift condition based on the normal running downshift lines and a gear shift condition based on the sport running downshift lines. Otherwise, one is employed as "first condition DN" and the other is employed as "second condition DN" of a gear shift condition based on the normal running downshift lines and a gear shift condition based on the eco running downshift lines.

As to the first condition SH and the second condition SH, for example, a gear shift condition may also be employed as "first condition SH", to select a transmission speed based on the running state of the vehicle 10 from the gear shift line diagram stored in advance for a transmission speed on the relatively high vehicle speed side (the high gear ratio side) to tend to be determined (selected), and a gear shift condition may also be employed as "second condition SH" that is different from the first condition, to select a transmission speed based on the running state of the vehicle 10 from the gear shift line diagram stored in advance for a transmission speed on the relatively low vehicle speed side (the low gear ratio side) to tend to be determined (selected) compared to the transmission speed selected based on the first condition SH.

The normal running gear shift line diagram as depicted in Fig. 4 is set in advance to enable the driving with high fuel efficiency and the motive power performance of the vehicle 10 fully extracted as above. Therefore, according to the gear shift control of the automatic transmission 16 using the normal running gear shift line diagram executed when the normal mode is selected, for example, a transmission speed is selected that provides the most excellent fuel efficiency within the extent that no motive power performance, and vibration and noise (NV) performance are victimized. The sport running gear shift line diagram as depicted in Fig. 5 is set in advance such that the motive power performance is prioritized to the fuel efficiency performance of the vehicle 10 against the normal running gear shift line diagram. Therefore, according to the gear shift control of the automatic transmission 16 executed using the sport running gear shift line diagram used when the sport mode (power mode) is selected, the gear shift is executed on a higher vehicle speed side compared to that of the normal mode, and, for example, though the vibration and noise (NV) performance and the fuel efficiency are victimized to some extent, the range of using the transmission gears on the low speed side moves to a higher vehicle speed side and a transmission speed increasing the driving power is selected. The eco running gear shift line diagram as depicted in Fig. 6 is set in advance such that the fuel efficiency performance is prioritized to the motive power performance of the vehicle 10 against the normal running gear shift line diagram. Therefore, according to the gear shift control of the automatic transmission 16 executed using the eco running gear shift line diagram used when the eco mode is selected, the gear shift is executed on a lower vehicle speed side compared to that in the normal mode, and, for example, though the motive power performance, etc., are victimized to some extent, the range of using the transmission gears moves to a lower vehicle speed side and a transmission speed providing the most excellent fuel efficiency is selected.

Therefore, for example, when the sport mode is selected, for example, one condition of the first condition SH and the second condition SH is a normal gear shift condition (sport running normal gear shift condition) to select a transmission speed based on the running state of the vehicle 10 from the normal running gear shift line diagram when the sport mode is selected, and the other condition is a motive power prioritized gear shift condition to select a transmission speed based on the running state of the vehicle 10 from the sport running gear shift line diagram when the sport mode is selected. For example, when the eco mode is selected, for example, one condition of the first condition SH and the second condition SH is a normal gear shift condition (eco running normal gear shift condition) to select a transmission speed based on the running state of the vehicle 10 from the normal running gear shift line diagram when the eco mode is selected, and the other condition is a fuel efficiency prioritized gear shift condition to select a transmission speed based on the running state of the vehicle 10 from the eco running gear shift line diagram when the eco mode is selected. When the normal mode is selected, for example, a transmission speed is selected based only on one condition of the first condition SH and the second condition SH. When the normal mode is selected, for example, a transmission speed is selected based only on the normal gear shift condition to select a transmission speed based on the running state of the vehicle 10 from the normal running gear shift line diagram, that is one condition of the first condition SH and the second condition SH.

Returning back to Fig. 3, an AI gear shift control portion, that is, an AI gear shift control means 106 executes gear shift control of the automatic transmission 16 based on, for example, information on the road to run for the vehicle 10, separately from the gear shift control by the gear shift control means 102 using the gear shift line diagram. More specifically, the AI gear shift control means 106 includes an uphill and downhill determining portion, that is, an uphill and downhill determining means 108, an uphill and downhill gear shift control portion, that is, an uphill and downhill gear shift control means 110, and a navigation cooperative gear shift control portion, that is, a navigation cooperative gear shift control means 112. In the embodiment, for example, a gear shift condition is employed as "first condition MAP" to select a transmission speed based on the running state of the vehicle 10 from a gear shift line diagram stored in advance, and a gear shift condition is employed as "second condition AI" that is different from the first condition MAP, to select a transmission speed based on the information on the road to run for the vehicle 10.

The uphill and downhill determining means 108 determines, for example, information on an uphill or a downhill as the information on the road to run for the vehicle 10, that is, determines whether the road to run for the vehicle 10 is an uphill or a downhill. More specifically, the uphill and downhill determining means 108 using, for example, the throttle valve opening angle θ_{TH}, the vehicle speed V, and the engine rotation speed N_{E} as parameters calculates reference acceleration G_{K} based on the throttle valve opening angle θ_{TH}, the vehicle speed V, and the engine rotation speed N_{E} from the relation (a reference acceleration map) acquired and stored in advance to acquire the reference acceleration G_{K} to be generated during running on a flat road. The uphill and downhill determining means 108 determines an uphill when, for example, an actual vehicle acceleration G is smaller than the reference acceleration G_{K} by a predetermined uphill determinative value α (>0) or more, and determines an downhill when, for example, the actual vehicle acceleration G is larger than the reference acceleration G_{K} by a predetermined downhill determinative value β (>0) or more, The uphill and downhill determining means 108, for example, calculates an acceleration difference G' (=G_{K}-G) between the reference acceleration G_{K} and the actual vehicle acceleration G. The acceleration difference G' represents the magnitude of the road surface slope θ on which the vehicle 10 is actually running by comparing the actual vehicle acceleration G to the reference acceleration G_{K}. The road surface slope θ becomes larger as the absolute value of the acceleration difference G' becomes larger. The uphill and downhill determining means 108 determines an uphill when, for example, the acceleration difference G' is equal to or larger than the predetermined uphill determinative value α, and determines a downhill when the acceleration difference G' is equal to or smaller than a predetermined downhill determinative value β' (<0). The predetermined uphill determinative value α is a determinative value that is experimentally determined and stored in advance to determine that a road is an uphill having the road surface slope θ that is equal to or larger than a predetermined value. The predetermined downhill determinative value β and the predetermined downhill determinative value β' are determinative values that are experimentally determined and stored in advance to determine that a road is a downhill having the road surface slope θ that is equal to or larger than a predetermined value. The degree of the steepness of the slope of an uphill or a downhill may also be determined by preparing a plural kinds of each of the predetermined uphill determinative value α, and the predetermined downhill determinative values β and β' together with a plurality of road surface slopes θ. A measured value detected by the acceleration sensor 93 may also be used or a calculated value calculated from the vehicle speed V, etc., may also be used as the actual vehicle acceleration G.

The uphill and downhill gear shift control means 110 controls the gear shifting of the automatic transmission 16 based on, for example, information on an uphill or a downhill on which the vehicle 10 runs. For example, when the uphill and downhill determining means 108 determines that a road to run for the vehicle 10 is an uphill or a downhill, the uphill and downhill gear shift control means 110 limits the gear shifting to a transmission gear on the high speed side (a high gear) of the automatic transmission 16. More specifically, the uphill and downhill gear shift control means 110 prohibits or suppresses upshifting to the highest-speed transmission gear such as, for example, the fifth transmission gear or a high-speed transmission gear such as, for example, the fourth transmission gear to enable a proper driving force to usually be acquired on an uphill, and automatically downshifts to a lower transmission gear than the current transmission gear such as, for example, the third transmission gear to enable the proper engine braking to be acquired on a downhill.

The navigation cooperative gear shift control means 112 controls the gear shifting of the automatic transmission 16 based on, for example: the information on the road to run as the information on the road to run for the vehicle 10 from the navigation system 92 that is well known as a running position determining apparatus to determine the running position of the vehicle 10 according to an electromagnetic wave from an artificial satellite; information relating to the state around the vehicle 10 or in front of the vehicle 10 transmitted from a transmitting apparatus disposed on the road; etc. For example, the navigation cooperative gear shift control means 112 selects a proper transmission speed from a relation determined in advance based on: road corner information acquired from the navigation system 92 such as, for example, information on curves present on the road ahead; presence or absence of an operation of the accelerator pedal 64; presence or absence of an operation of the foot brake 68; etc. More specifically, the navigation cooperative gear shift control means 112 selects a transmission speed matching this transmission speed with the degree of the sharpness of the corner and executes downshifting to the selected transmission speed to acquire a proper engine braking force when the vehicle 10 enters a corner with the accelerator pedal released, or prohibits any upshifting associated with the release of the accelerator pedal until the vehicle 10 passes the position around the peak of the corner. The navigation cooperative gear shift control means 112 may also select a proper transmission speed from, for example, a relation (map) determined in advance to select a transmission speed on the transmission gear side on the lower vehicle speed (lower transmission gear) side as the slope is steeper or the corner is sharper, based on the road surface slope information of an uphill or a downhill from the uphill and downhill determining means 108 and the information on the road to run from the navigation system 92.

The navigation cooperative gear shift control means 112 suppresses any upshifting of the automatic transmission 16 to improve easiness of the acceleration when the vehicle 10 pulls into traffic of the main road such as, for example, during a section to pull into traffic of the main road based on information on an interchange, a service area, a rest area, etc., of a limited highway such as an express highway acquired from the navigation system 92. The navigation cooperative gear shift control means 112 executes downshifting of the automatic transmission 16 in response to release of the accelerator pedal or stepping on of the brake pedal, or prohibits upshifting associated with the release of the accelerator pedal to improve the easiness of speed reduction when the vehicle 10 exits the main road based on the information on an interchange, a service area, a rest area, etc., of a limited highway such as an express highway acquired from the navigation system 92. The navigation cooperative gear shift control means 112 executes downshifting of the automatic transmission 16 in response to the release of the accelerator pedal or prohibits any upshifting associated with the release of the accelerator pedal to improve the easiness of speed reduction when the distance to a toll gate or a ticket gate is equal to or shorter than a predetermined distance based on information on the toll gate, the ticket gate, etc., on the main road of a limited highway such as an express highway acquired from the navigation system 92.

A hardware protective gear shift control portion, that is, a hardware protective gear shift control means 114 executes the gear shifting control of the automatic transmission 16 based on, for example, information to protect apparatuses mounted on the vehicle 10 and engaged in the vehicle's running and, independently from the gear shift control by the gear shift control means 102 using the gear shift line diagram. In the embodiment, a gear shift condition is employed as "first condition MAP" to select a transmission speed based on, for example, the running state of the vehicle 10 from the gear shift line diagram stored in advance, and a gear shift condition is employed as "second condition HP" different from the first condition MAP, to select a transmission speed based on information to protect the apparatuses mounted on the vehicle 10 and engaged in the vehicle's running.

More specifically, the apparatuses engaged in the vehicle's running include, for example, the automatic transmission 16. The hardware protective gear shift control means 114 controls the gear shifting of the automatic transmission 16 based on information on the actuating oil temperature T_{OIL} of the automatic transmission 16 as information to protect the automatic transmission 16. For example, the hardware protective gear shift control means 114 executes upshifting of the automatic transmission 16 to decrease the actuating oil temperature T_{OIL} to a temperature lower than a predetermined high oil temperature T_{OILH}. The predetermined high oil temperature T_{OILH} is, for example, an actuating oil temperature that is the high temperature limit in the actuating oil temperature range experimentally acquired and set in advance to properly actuate the automatic transmission 16.

More specifically, the apparatuses engaged in the vehicle's running include, for example, the engine 12. The hardware protective gear shift control means 114 controls the gear shifting of the automatic transmission 16 based on the information on the engine rotation speed N_{E} as information to protect the engine 12. For example, the hardware protective gear shift control means 114 executes upshifting of the automatic transmission 16 such that the engine rotation speed N_{EL} does not increase to a predetermined excessive rotation speed N_{EOL}. The predetermined excessive rotation speed N_{EOL} is, for example, an engine rotation speed that is the high rotation limit in the engine operation range experimentally acquired and set in advance to prevent the durability of the engine 12 from being degraded.

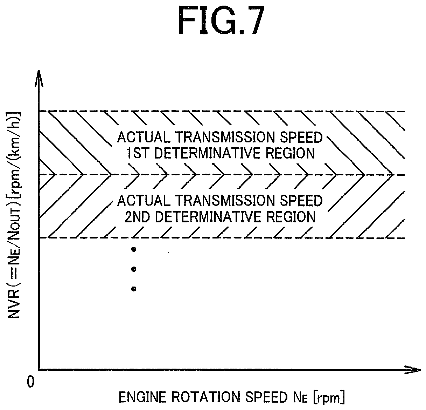

An actual transmission speed calculating portion, that is, an actual transmission speed calculating means 116 calculates an actual transmission speed, that is, an actual transmission speed G_{REAL} of the automatic transmission 16 based on, for example, the actual engine rotation speed N_{E} and the output shaft rotation speed N_{OUT} from the relation (actual transmission speed calculation map) experimentally acquired and stored in advance constituted of a plurality of determinative regions set in a two-dimensional coordinate system of an engine rotation speed axis and an NVR axis as depicted in Fig. 7. In Fig. 7, the axis of abscissa represents the engine rotation speed N_{E} and the axis of ordinate represents the value acquired by dividing the engine rotation speed N_{E} by the output shaft rotation speed N_{OUT}, that is, NVR (=N_{E}/N_{OUT}) value. The engine rotation speed N_{E} and the output shaft rotation speed N_{OUT} respectively correspond to the input rotation speed N_{IN} of the automatic transmission 16 and the vehicle speed V, and various aspects of the actual transmission speed calculating means 116 are enabled such as the one that calculates the actual transmission speed G_{REAL} based on the actual input rotation speed N_{IN} and the vehicle speed V from the relation (map) stored in advance using as parameters the input rotation speed N_{IN} and the vehicle speed V.

In the actual transmission speed calculation map depicted in Fig. 7, the plurality of determinative regions are each defined for each of the transmission speed. When a position identified in the actual transmission speed calculation map based on the actual engine rotation speed N_{E} and the output shaft rotation speed N_{OUT} is located in a first transmission speed determinative region of the plurality of determinative regions, the actual transmission speed calculating means 116 determines that the actual transmission speed G_{REAL} of the automatic transmission 16 is a first transmission speed, and sets the first transmission speed to be the actual transmission speed G_{REAL}. Similarly, when a position identified in the actual transmission speed calculation map is in a second transmission speed determinative region, a third transmission speed determinative region, a fourth transmission speed determinative region, or a fifth transmission speed determinative region, the actual transmission speed calculating means 116 sets the second transmission speed, the third transmission speed, the fourth transmission speed, or the fifth transmission speed to be the actual transmission speed G_{REAL}. The actual transmission speed calculation map of Fig. 7 depicts the first transmission speed determinative region and the second transmission speed determinative region and, assuming that the automatic transmission 16 is, for example, a five-forward-speed automatic transmission, the third transmission speed determinative region to the fifth transmission speed determinative region are not depicted therein.

Returning back to Fig. 3, a gear shift line requirement transmission speed calculating portion, that is, a gear shift line requirement transmission speed calculating means 118 calculates, for example, a gear shift line requirement transmission speed G_{REQ}M as the proper transmission speed for the automatic transmission 16 to shift its transmission speed to, based on the actual vehicle speed V and the throttle valve opening angle θ_{TH} from the gear shift line diagram stored in advance. More specifically, the gear shift line requirement transmission speed calculating means 118 calculates, for example, a normal mode requirement transmission speed G_{REQ}N as the proper transmission speed for the automatic transmission 16 to shift its transmission speed to in the normal mode (and even not in the normal mode), based on the actual vehicle speed V and the throttle valve opening angle θ_{TH} from the normal running gear shift line diagram as depicted in Fig. 4. The gear shift line requirement transmission speed calculating means 118 calculates, for example, a sport mode requirement transmission speed G_{REQ}S as the proper transmission speed for the automatic transmission 16 to shift its transmission speed to in the sport mode, based on the actual vehicle speed V and the throttle valve opening angle θ_{TH} from the sport running gear shift line diagram as depicted in Fig. 5. The gear shift line requirement transmission speed calculating means 118 calculates, for example, an eco mode requirement transmission speed G_{REQ}E as the proper transmission speed for the automatic transmission 16 to shift its transmission speed to in the eco mode, based on the actual vehicle speed V and the throttle valve opening angle θ_{TH} from the eco running gear shift line diagram as depicted in Fig. 6. For the calculation of the gear shift line requirement transmission speeds G_{REQ}M that are the normal mode requirement transmission speed G_{REQ}N, the sport mode requirement transmission speed G_{REQ}S, and the eco mode requirement transmission speed G_{REQ}E, various aspects are enabled such as the one executed based on, for example, the accelerator pedal opening angle A_{CC} or the intake air amount Q_{AIR} in stead of the throttle valve opening angle θ_{TH}.

The gear shift line requirement transmission speed G_{REQ}M will be described in detail with reference to Fig. 4 as an example. In Fig. 4, the speed reduction gear shift lines (downshift lines) depicted by dotted lines each define a timing for gear shifting to reduce the vehicle speed and are each determined for gear shifting between each combination of the transmission speeds. When a position indicating the running state of the vehicle 10 identified in the gear shift line diagram based on the actual vehicle speed V and the throttle valve opening angle θ_{TH} moves from a region on the right of the speed reduction gear shift line to the region on the left thereof, the gear shift line requirement transmission speed calculating means 118 determines that gear shifting must be executed to the speed reduction side and sets the transmission speed corresponding to the speed reduction gear shift line to be the gear shift line requirement transmission speed G_{REQ}M, More specifically, when the position identified in the gear shift line diagram based on the actual vehicle speed V and the throttle valve opening angle θ_{TH}, crosses, for example, from the right to the left a 2-to-1 gear shift line of those of Fig. 4, the gear shift line requirement transmission speed calculating means 118 determines that gear shifting must be executed from the second transmission speed to the first transmission speed and sets the first transmission speed to be the gear shift line requirement transmission speed G_{REQ}M. Similarly, when the position identified in the gear shift line diagram crosses from the right to the left a 3-to-2 gear shift line, a 4-to-3 gear shift line, or a 5-to-4 gear shift line, the gear shift line requirement transmission speed calculating means 118 sets the second transmission speed, the third transmission speed, or the fourth transmission speed to be the gear shift line requirement transmission speed G_{REQ}M.

In Fig. 4, the speed increase gear shift lines (upshift lines) depicted by solid lines each define a timing for gear shifting to increase the vehicle speed and are each determined for gear shifting between each combination of the transmission speeds. When a position indicating the running state of the vehicle 10 identified in the gear shift line diagram based on the actual vehicle speed V and the throttle valve opening angle θ_{TH} moves from a region on the left of the speed increase gear shift line to the region on the right thereof, the gear shift line requirement transmission speed calculating means 118 determines that gear shifting must be executed to a speed increase side and sets the transmission speed corresponding to the speed increase gear shift line to be the gear shift line requirement transmission speed G_{REQ}M. More specifically, when the position identified in the gear shift line diagram based on the actual vehicle speed V and the throttle valve opening angle θ_{TH} crosses, for example, from the left to the right a 1-to-2 gear shift line of those of Fig. 4, the gear shift line requirement transmission speed calculating means 118 determines that gear shifting must be executed from the first transmission speed to the second transmission speed and sets the second transmission speed to be the gear shift line requirement transmission speed G_{REQ}M. Similarly, when the position identified in the gear shift line diagram crosses from the left to the right a 2-to-3 gear shift line, a 3-to-4 gear shift line, or a 4-to-5 gear shift line, the gear shift line requirement transmission speed calculating means 118 sets the third transmission speed, the fourth transmission speed, or the fifth transmission speed to be the gear shift line requirement transmission speed G_{REQ}M.

Returning back to Fig. 3, the AI gear shift control means 106 sets, for example, a transmission speed selected based on the information on the road to run for the vehicle 10 to be an AI requirement transmission speed G_{REQ}A as the proper transmission speed for the automatic transmission 16 to shift its transmission speed to. The hardware protective gear shift control means 114 sets, for example, a transmission speed selected based on information to protect the apparatuses mounted on the vehicle 10 and engaged in the vehicle's running to be a protective requirement transmission speed G_{REQ}H as the proper transmission speed for the automatic transmission 16 to shift its transmission speed to.

As above, the proper transmission speeds each for the automatic transmission 16 to shift its transmission speed to, that is, requirement transmission speeds G_{REQ} are: the gear shift line requirement transmission speeds G_{REQ}M (the normal mode requirement transmission speed G_{REQ}N, the sport mode requirement transmission speed G_{REQ}S, and the eco mode requirement transmission speed G_{REQ}E) calculated by the gear shift line requirement transmission speed calculating means 118; the AI requirement transmission speed G_{REQ}A set by the AI gear shift control means 106; and the protective requirement transmission speed G_{REQ}H set by the hardware protective gear shift control means 114. In the normal mode, the normal mode requirement transmission speed G_{REQ}N is the requirement transmission speed G_{REQ} set based on only one gear shift condition of the first condition SH and the second condition. In the sport mode, the normal mode requirement transmission speed G_{REQ}N is the requirement transmission speed G_{REQ} set based on only one gear shift condition of the first condition SH and the second condition and the sport mode requirement transmission speed G_{REQ}S is the requirement transmission speed G_{REQ} set based on the other gear shift condition. In the eco mode, the normal mode requirement transmission speed G_{REQ}N is the requirement transmission speed G_{REQ} set based on either one gear shift condition of the first condition SH and the second condition and the eco mode requirement transmission speed G_{REQ}E is the requirement transmission speed G_{REQ} set based on the other gear shift condition. The AI requirement transmission speed G_{REQ}A and the protective requirement transmission speed G_{REQ}H are the requirement transmission speeds G_{REQ} set based respectively on the second conditions AI and HP that are different from the first condition MAP

A gear shift instruction determining portion, that is, a gear shift instruction determining means 120 determines, for example, whether any gap is present between the actual transmission speed G_{REAL} calculated by the actual transmission speed calculating means 116 and each of the above requirement transmission speeds G_{REQ}, that is, whether any difference is present between the actual transmission speed G_{REAL} and the requirement transmission speed G_{REQ}. More specifically, when the actual transmission speed G_{REAL} is compared to and consequently is lower than the requirement transmission speed G_{REQ}, the gear shift instruction determining means 120 orders a gear shift instruction control means 128 described later to output an upshift instruction signal S_{UP} to the gear shift indicating device 30. When the actual transmission speed G_{REAL} is compared to and consequently is higher than the requirement transmission speed G_{REQ}, the gear shift instruction determining means 120 orders the gear shift instruction control means 128 described later to output a downshift instruction signal S_{DOWN} to the gear shift indicating device 30. Thereby, when a difference is present between the actual transmission speed G_{REAL} and the requirement transmission speed G_{REQ}, the gear shift indicator 52 indicates an instruction of shifting operation to vary the actual transmission speed G_{REAL} to the requirement transmission speed G_{REQ} using only a combination of gear shift indicating devices 30 having the upshift indicating lamp 44 and the downshift indicating lamp 46. When the actual transmission speed G_{REAL} and the requirement transmission speed G_{REQ} are equal to each other, the gear shift instruction determining means 120 does not order the outputting of the upshift instruction signal S_{UP} and the downshift instruction signal S_{DOWN} to the gear shift indicating device 30. Thereby, when the actual transmission speed G_{REAL} and the requirement transmission speed G_{REQ} are equal to each other, both of the upshift indicating lamp 44 and the downshift indicating lamp 46 are turned off.

A gear shifting requirement presence or absence determining portion, that is, a gear shifting requirement presence or absence determining means 122 determines, for example, whether a gap is present between the actual transmission speed G_{REAL} and the normal mode requirement transmission speed G_{REQ}N. For example, when the gear shifting requirement presence or absence determining means 122 determines that a gap is present between the actual transmission speed G_{REAL} and the normal mode requirement transmission speed G_{REQ}N, the gear shifting requirement presence or absence determining means 122 further determines whether a gap spanning three or more transmission speeds is present between the actual transmission speed G_{REAL} and the normal mode requirement transmission speed G_{REQ}N. The gear shifting requirement presence or absence determining means 122 determines, for example, whether the AI gear shift control means 106 sets the AI requirement transmission speed G_{REQ}A. The gear shifting requirement presence or absence determining means 122 determines, for example, whether the hardware protective gear shift control means 114 sets the protective requirement transmission speed G_{REQ}H.

A flag setting portion, that is, a flag setting means 124 sets, for example, a flag 1 as a flag F to set an instruction method for instructing the driver about a gear shifting operation using the gear shift indicating device 30 when the gear shifting requirement presence or absence determining means 122 determines that no gap spanning three or more transmission speeds is present (that is, the gap spanning two transmission speeds is present) between the actual transmission speed G_{REAL} and the normal mode requirement transmission speed G_{REQ}N. The flag setting means 124 sets, for example, a flag 2 as the flag F when the gear shifting requirement presence or absence determining means 122 determines that a gap spanning three or more transmission speeds is present between the actual transmission speed G_{REAL} and the normal mode requirement transmission speed G_{REQ}N. The flag setting means 124 sets, for example, a flag 3 as the flag F when the running mode determining means 104 determines that the sport mode ON SW_ON is output. The flag setting means 124 sets, for example, a flag 4 as the flag F when the running mode determining means 104 determines that the eco mode ON SW_ON is output. The flag setting means 124 sets, for example, a flag 5 as the flag F when the gear shifting requirement presence or absence determining means 122 determines that the AI requirement transmission speed G_{REQ}A is set. The flag setting means 124 sets, for example, a flag 6 as the flag F when the gear shifting requirement presence or absence determining means 122 determines that the protective requirement transmission speed G_{REQ}H is set. The flag setting means 124 sets a flag 0 as the flag F when no determination is made to set any one of the flags 1 to 6 as the flag F.

A manual gear shift mode determining portion, that is, a manual gear shift mode determining means 126 determines, for example, whether any manual gear shift mode (the "S" mode or the "M" mode) is established. More specifically, the manual gear shift mode determining means 126 determines whether any manual gear shift mode is established, by determining whether the shift lever 82 is positioned at a forward manual gear shift running position "S" to establish the manual gear shift mode, based on the lever position P_{SH} of the shift lever 82.

A gear shift instruction control portion, that is, the gear shift instruction control means 128 outputs, for example, the upshift instruction signal S_{UP} or the downshift instruction signal S_{DOWN} to the gear shift indicating device 30 using an instruction method based on each flag F set by the flag setting means 124 when the manual gear shift mode determining means 126 determines that the manual gear shift mode is established and the gear shift instruction determining means 120 orders the output of the upshift instruction signal S_{UP} or the downshift instruction signal S_{DOWN} to the gear shift indicating device 30.

The instruction method based on each flag F will be described below. When the flag F is the flag 0, for example, both of the upshift indicating lamp 44 and the downshift indicating lamp 46 are turned off. When the flag F is the flag 1, for example, the driver is instructed about a gear shifting operation to the normal mode requirement transmission speed G_{REQ}N by a normal mode first instruction method of turning on the upshift indicating lamp 44 or the downshift indicating lamp 46. The normal mode first instruction method is an instruction method to be used when only the normal mode requirement transmission speed G_{REQ}N is set as the requirement transmission speed G_{REQ}. When the flag F is the flag 2, for example, the driver is instructed about a gear shifting operation to the normal mode requirement transmission speed G_{REQ}N by an instruction method of causing the upshift indicating lamp 44 or the downshift indicating lamp 46 to slowly flicker as set in advance. The slow flickering is flickering that is slower than normal flickering used when the flag F is the flag 3 or the flag 4 as described later.

When the flag F is the flag 3, for example, the driver is instructed about a gear shifting operation to the normal mode requirement transmission speed G_{REQ}N and a gear shifting operation to the sport mode requirement transmission speed G_{REQ}S distinguishing these operations from each other by using: an instruction method of instructing the driver about the gear shifting operation to the normal mode requirement transmission speed G_{REQ}N by causing the upshift indicating lamp 44 or the downshift indicating lamp 46 to flicker in a normal flickering manner set in advance; and an instruction method of instructing the driver about the gear shifting operation to the sport mode requirement transmission speed G_{REQ}S by turning on the upshift indicating lamp 44 or the downshift indicating lamp 46. In this manner, when the flag F is the flag 3, in addition to the instruction about the gear shifting operation to the normal mode requirement transmission speed G_{REQ}N (flickering), the driver is instructed about the gear shifting operation to the sport mode requirement transmission speed G_{REQ}S by the instruction about the gear shifting operation (turning on) that is different from the instruction about the gear shifting operation to the normal mode requirement transmission speed G_{REQ}N (flickering). Therefore, in the sport mode, the driver is able to properly be instructed about the gear shifting operations to the normal mode requirement transmission speed G_{REQ}N and the sport mode requirement transmission speed G_{REQ}S without switching to the normal mode. For example, when upshifting of the automatic transmission 16 is determined associated with an increase of the vehicle speed V, such methods are used as: firstly, a sport-mode first instruction method of instructing the driver about an upshifting operation to the normal mode requirement transmission speed G_{REQ}N by causing the upshift indicating lamp 44 to normally flicker; and, thereafter, a sport-mode second instruction method of instructing the driver about an upshifting operation to the sport mode requirement transmission speed G_{REQ}S by turning on the upshift indicating lamp 44.

When the flag F is the flag 4, for example, the driver is instructed about the gear shifting operation to the normal mode requirement transmission speed G_{REQ}N and a gear shifting operation to the eco mode requirement transmission speed G_{REQ}E distinguishing these operations from each other by using: an instruction method of instructing the driver about the gear shifting operation to the normal mode requirement transmission speed G_{REQ}N by causing the upshift indicating lamp 44 or the downshift indicating lamp 46 to flicker in a normal flickering manner set in advance; and an instruction method of instructing the driver about the gear shifting operation to the eco mode requirement transmission speed G_{REQ}E by turning on the upshift indicating lamp 44 or the downshift indicating lamp 46. In this manner, when the flag F is the flag 4, in addition to the instruction about the gear shifting operation to the normal mode requirement transmission speed G_{REQ}N (flickering), the driver is instructed about the gear shifting operation to the eco mode requirement transmission speed G_{REQ}E by the instruction about the gear shifting operation (turning on) that is different from the instruction about the gear shifting operation to the normal mode requirement transmission speed G_{REQ}N (flickering). Therefore, in the eco mode, the driver is able to properly be instructed about the gear shifting operations to the normal mode requirement transmission speed G_{REQ}N and the eco mode requirement transmission speed G_{REQ}E without switching to the normal mode. For example, when upshifting of the automatic transmission 16 is determined associated with an increase of the vehicle speed V, such methods are used as: firstly, an eco mode first instruction method of instructing the driver about an upshifting operation to the eco mode requirement transmission speed G_{REQ}E by turning on the upshift indicating lamp 44; and, thereafter, an eco mode second instruction method of instructing the driver about an upshifting operation to the normal mode requirement transmission speed G_{REQ}N by causing the upshift indicating lamp 44 to normally flicker.

When the flag F is the flag 5, for example, the driver is instructed about the gear shifting operation to the AI requirement transmission speed G_{REQ}A by using an instruction method of causing the upshift indicating lamp 44 or the downshift indicating lamp 46 to flicker in a quick flickering manner set in advance. In this manner, when the flag F is the flag 5, the driver is instructed about the gear shifting operation to the gear shift line requirement transmission speed G_{REQ}M and the gear shifting operation to the AI requirement transmission speed G_{REQ}A clearly distinguishing these operations from each other by using an instruction method of instructing the driver about the gear shifting operation to the AI requirement transmission speed G_{REQ}A by the gear shifting operation instruction that more strongly urges the driver to execute the gear shifting operation compared to the gear shifting operation instruction in the instruction method based on the first condition MAP, of turning on the upshift indicating lamp 44 or the downshift indicating lamp 46. Therefore, the driver is able to properly be instructed about the gear shifting operations to the gear shift line requirement transmission speed G_{REQ}M and the AI requirement transmission speed G_{REQ}A without switching the running mode. For example, during accelerated running, such methods are used as: a map first instruction method of instructing the driver about the gear shifting operation to the gear shift line requirement transmission speed G_{REQ}M (for example, the normal mode requirement transmission speed G_{REQ}N) by turning on the lamp from the time when the first condition MAP (for example, a gear shift condition based on the normal running upshift line) is satisfied to the time when the second condition AI is satisfied; and an AI requirement second instruction method of instructing the driver about the gear shifting operation to the AI requirement transmission speed G_{REQ}A by causing the lamp to quickly flicker after the second condition AI is satisfied. The quick flickering is flickering that is quicker than the normal flickering.

When the flag F is the flag 6, for example, the driver is instructed about a gear shifting operation to the protective requirement transmission speed G_{REQ}H by using an instruction method of causing the upshift indicating lamp 44 or the downshift indicating lamp 46 to flicker in a highly quick flickering manner set in advance. In this manner, when the flag F is the flag 6, the driver is instructed about the gear shifting operation to the gear shift line requirement transmission speed G_{REQ}M and the gear shifting operation to the protective requirement transmission speed G_{REQ}H clearly distinguishing these operations from each other by using an instruction method of instructing the driver about the gear shifting operation to the protective requirement transmission speed G_{REQ}H by the gear shifting operation instruction that more strongly urges the driver to execute the gear shifting operation compared to the gear shifting operation instruction in the instruction method based on the first condition MAP, of turning on the upshift indicating lamp 44 or the downshift indicating lamp 46. Therefore, the driver is able to properly be instructed about the gear shifting operations to the gear shift line requirement transmission speed G_{REQ}M and the protective requirement transmission speed G_{REQ}H without switching the running mode. For example, during accelerated running, such methods are used as: a map first instruction method of instructing the driver about the gear shifting operation to the gear shift line requirement transmission speed G_{REQ}M (for example, the normal mode requirement transmission speed G_{REQ}N) by turning on the lamp from the time when the first condition MAP (for example, a gear shift condition based on the normal running upshift line) is satisfied to the time when the second condition HP is satisfied; and an protective requirement second instruction method of instructing the driver about the gear shifting operation to the protective requirement transmission speed G_{REQ}H by causing the lamp to highly quickly flicker after the second condition HP is satisfied. The highly quick flickering is flickering that is quicker than the quick flickering used when the flag F is the flag 5. Protection of the apparatuses engaged in the vehicle's running is more important than the gear shifting based on the information on the road to run and, therefore, when the flag F is the flag 6, the driver is instructed about the gear shifting operation to the protective requirement transmission speed G_{REQ}H by the gear shifting operation instruction that more strongly urges the driver to execute the gear shifting operation compared to the gear shifting operation instruction used when the flag F is the flag 5.

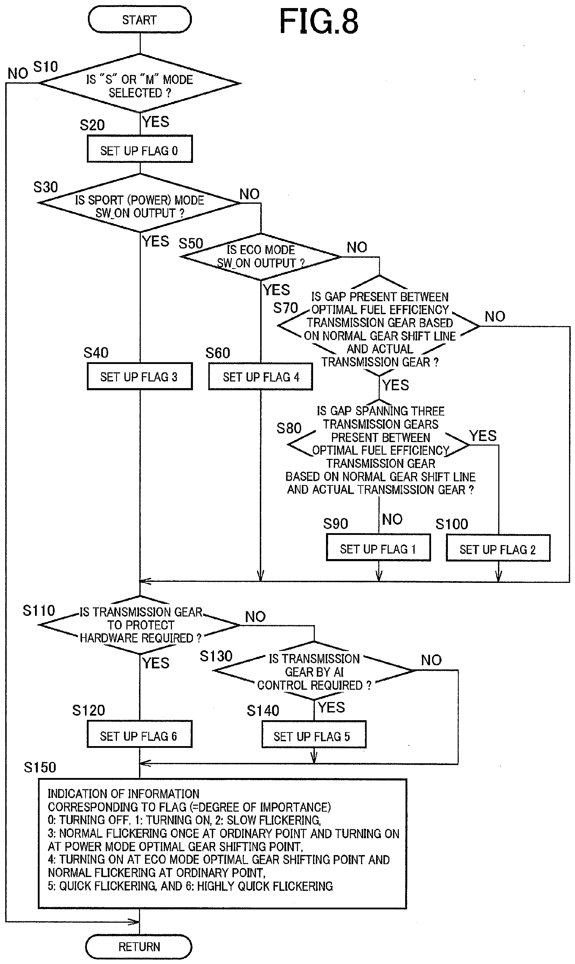

Fig. 8 is a flowchart for explaining the purview of control actions of the electronic control apparatus 50, that is, control actions to properly instruct the driver about the gear shifting operation to a proper transmission speed, and the control actions are repeatedly executed by an extremely short cycle time that is, for example, several msec to several 10 msec.

In Fig. 8, firstly, at step S10 (hereinafter, "step" will not be added) corresponding to the manual gear shift mode determining means 126, for example, it is determined whether the manual gear shift mode (the "S" mode or the "M" mode) is established, based on the lever position P_{SH} of the shift lever 82. When the determination at S10 is denied, this routine comes to an end. However, when the determination is affirmed, at S20 corresponding to the flag setting means 124, for example, the flag 0 is set as the flag F. At S30 corresponding to the running mode determining means 104, for example, it is determined whether the sport mode ON SW_ON is output, that is, whether the sport mode is selected. When the determination at S30 is affirmed, at S40 corresponding to the flag setting means 124, for example, the flag 3 is set as the flag F. On the other hand, when the determination at S30 is denied, at S50 corresponding to the running mode determining means 104, for example, it is determined whether the eco mode ON SW_ON is output, that is, whether the eco mode is selected. When the determination at S50 is affirmed, at S60 corresponding to the flag setting means 124, for example, the flag 4 is set as the flag F. On the other hand, when the determination at S50 is denied, at S70 corresponding to the gear shifting requirement presence or absence determining means 122, for example, it is determined whether any gap is present between the actual transmission speed G_{REAL} and the normal mode requirement transmission speed G_{REQ}N. When the determination at S70 is affirmed, at S80 corresponding also to the gear shifting requirement presence or absence determining means 122, for example, it is determined whether any gap spanning three or more transmission speeds is present between the actual transmission speed G_{REAL} and the normal mode requirement transmission speed G_{REQ}N. When the determination at S80 is denied, at S90 corresponding to the flag setting means 124, for example, the flag 1 is set as the flag F. On the other hand, when the determination at S80 is affirmed, at S100 corresponding to the flag setting means 124, for example, the flag 2 is set as the flag F. Following S40, S60, S90, or S100, or when the determination at S70 is denied, at S110 corresponding to the gear shifting requirement presence or absence determining means 122, for example, it is determined whether the hardware protective gear shift control means 114 issues a transmission gear requirement to protect the hardware, that is, whether the protective requirement transmission speed G_{REQ}H is set. When the determination at S110 is affirmed, at S120 corresponding to the flag setting means 124, for example, the flag 6 is set as the flag F. On the other hand, when the determination at S110 is denied, at S 130 corresponding to the gear shifting requirement presence or absence determining means 122, for example, it is determined whether the AI gear shift control means 106 issues a transmission gear requirement, that is, whether the AI requirement transmission speed G_{REQ}A is set. When the determination at S130 is affirmed, at S140 corresponding to the flag setting means 124, for example, the flag 5 is set as the flag F.

Following S120 or S140, or when the determination at S130 is denied, at S150 corresponding to the gear shift instruction control means 128, for example, information indication is executed that corresponds to each flag F set at each of the above steps in response to the issuance of the order to output the upshift instruction signal S_{UP} or the downshift instruction signal S_{DOWN} to the gear shift indicating device 30. The outputting is executed of the upshift instruction signal S_{UP} or the downshift instruction signal S_{DOWN} to the gear shift indicating device 30 using the instruction method based on each flag. For example, with the flag 0, both of the upshift indicating lamp 44 and the downshift indicating lamp 46 are turned off. With the flag 1, the driver is instructed about the gear shifting operation to the normal mode requirement transmission speed G_{REQ}N using the normal mode first instruction method of turning on the upshift indicating lamp 44 or the downshift indicating lamp 46. With the flag 2, the driver is instructed about the gear shifting operation to the normal mode requirement transmission speed G_{REQ}N using the instruction method of causing the upshift indicating lamp 44 or the downshift indicating lamp 46 to flicker in the slow flickering manner set in advance. With the flag 3, for example, for determining upshifting associated with an increase of the vehicle speed V, the driver is instructed about the gear shifting operation to the normal mode requirement transmission speed G_{REQ}N and the gear shifting operation to the sport mode requirement transmission speed G_{REQ}S distinguishing these operations from each other by using: a sport mode first instruction method of instructing the driver about the upshifting operation to the normal mode requirement transmission speed G_{REQ}N by causing the upshift indicating lamp 44 to normally flicker; and, thereafter, a sport mode second instruction method of instructing the driver about the upshifting operation to the sport mode requirement transmission speed G_{REQ}S by turning on the upshift indicating lamp 44. With the flag 4, for example, for determining upshifting associated with an increase of the vehicle speed V, the driver is instructed about the gear shifting operation to the normal mode requirement transmission speed G_{REQ}N and the gear shifting operation to the eco mode requirement transmission speed G_{REQ}E distinguishing these operations from each other by using: an eco mode first instruction method of instructing the driver about the upshifting operation to the eco mode requirement transmission speed G_{REQ}E by turning on the upshift indicating lamp 44; and, thereafter, an eco mode second instruction method of instructing the driver about the upshifting operation to the normal mode requirement transmission speed G_{REQ}N by causing the upshift indicating lamp 44 to normally flicker. With the flag 5, the driver is instructed about the gear shifting operation to the AI requirement transmission speed G_{REQ}A by an instruction method of causing the upshift indicating lamp 44 or the downshift indicating lamp 46 to flicker in the quick flickering manner set in advance. For example, for increasing the vehicle speed, such methods are used as: a map first instruction method of instructing the driver by turning on the lamp about an gear shifting operation to the normal mode requirement transmission speed G_{REQ}N based on the normal running upshift line; and an AI requirement second instruction method of instructing the driver about the gear shifting operation to the AI requirement transmission speed G_{REQ}A by causing the lamp to quickly flicker (for example, temporality only during the time period for the flag 5 to be set) after the second condition AI is satisfied. With the flag 6, the driver is instructed about the gear shifting operation to the protective requirement transmission speed G_{REQ}H by using the instruction method of causing the upshift indicating lamp 44 or the downshift indicating lamp 46 to flicker in a highly quick flickering manner set in advance. For example, for increasing the vehicle speed, such methods are used as: the map first instruction method of instructing the driver by turning on the lamp about the gear shifting operation to the normal mode requirement transmission speed G_{REQ}N based on the normal running upshift line; and a protective requirement second instruction method of instructing the driver about the gear shifting operation to the protective requirement transmission speed G_{REQ}H by causing the lamp to highly quickly flicker (for example, temporality only during the time period for the flag 6 to be set) after the second condition HP is satisfied.

As above, according to the embodiment, in the case where the first condition and the second condition different from the first condition are both employed as the conditions, for example, when flags 3 to 6 are set, more specifically, when any one of the sport mode requirement transmission speed G_{REQ}S, the eco mode requirement transmission speed G_{REQ}E, the AI requirement transmission speed G_{REQ}A, and the protective requirement transmission speed G_{REQ}H is set as the proper transmission speed (that is, the requirement transmission speed G_{REQ}) in addition to the normal mode requirement transmission speed G_{REQ}N, the driver is instructed about the gear shifting operation to the requirement transmission speed G_{REQ} by using the instruction method that is different from that used when only one of the first condition and the second condition is employed as the condition (for example, when the flag 1 is set and, more specifically, when only the normal mode requirement transmission speed G_{REQ}N is set) and, therefore, the gear shifting instructions are executed based on the two different conditions. The instruction about the gear shifting operation to be executed when the first condition is satisfied and the instruction about the gear shifting operation to be executed when the second condition is satisfied are distinguished from each other and are both presented to the driver. Thereby, the gear shifting operation to the requirement transmission speed G_{REQ} is able to be properly instructed to the driver without, for example, switching the condition setting.

According to the embodiment, both of the first condition and the second condition are the conditions to instruct about upshifting or are the conditions to instruct about downshifting. Therefore, the instruction about the gear shifting operation to be executed when the first condition is satisfied and the instruction about the gear shifting operation to be executed when the second condition is satisfied are both presented to the driver for instructing about gear shifting operations of the same kind.

According to the embodiment, the second condition is a gear shift condition to select as the requirement transmission speed G_{REQ} a transmission speed set in advance such that a transmission speed on the low gear ratio side tends to be selected compared to the requirement transmission speed G_{REQ} to be selected based on the first condition, based on the running state of the vehicle 10 (for example, the vehicle speed V and the throttle valve opening angle θ_{TH}). Therefore, such instructions are both presented to the driver as: an instruction about the gear shifting operation to the requirement transmission speed G_{REQ} selected based on the first condition; and an instruction about the gear shifting operation to the requirement transmission speed G_{REQ} selected based on the running state of the vehicle 10 from the transmission speeds set in advance such that a transmission speed on the low gear ratio side tends to be selected.

According to the embodiment, one condition of the first condition SH and the second condition SH is a normal gear shift condition to select the normal mode requirement transmission speed G_{REQ}N based on the running state of the vehicle 10 from the normal running gear shift line diagram, employed when the eco mode is selected (eco running normal gear shift condition) and the other condition is a fuel-efficiency-prioritized gear shift condition to select the eco mode requirement transmission speed G_{REQ}E based on the running state of the vehicle 10 from the eco running transmission speed line diagram employed when the eco mode is selected. Therefore, for example, in the case where the eco mode is selected, such instructions are both presented to the driver as: an instruction about the gear shifting operation to be executed when the eco running normal gear shift condition is satisfied; and an instruction about the gear shifting operation to be executed when the fuel-efficiency-prioritized gear shift condition is satisfied.

According to the embodiment, when the eco mode is not selected, that is, for example, when the normal mode is selected, such method is used with only the normal gear shift condition employed as the condition, as the normal mode first instruction method (turning on) of instructing the driver about the gear shifting operation based on the normal gear shift condition and, when the eco mode is selected, such methods are used with both of the eco running normal gear shift condition and the fuel-efficiency-prioritized gear shift condition employed as the conditions, as: an instruction method of instructing the driver about the gear shifting operation based on the eco running normal gear shift condition (normal flickering) and an instruction method of instructing the driver about the gear shifting operation based on the fuel-efficiency-prioritized gear shift condition using the gear shifting operation instruction that is different from that used when the eco running normal gear shift condition is satisfied (turning on). Therefore, for example, when the eco mode is selected, such instructions are presented to the driver clearly distinguished from each other, as an instruction about the gear shifting operation to be executed when the eco running normal gear shift condition is satisfied and an instruction about the gear shifting operation to be executed when the fuel-efficiency-prioritized gear shift condition is satisfied.

According to the embodiment, one condition of the first condition SH and the second condition SH is the normal gear shift condition (sport running normal gear shift condition) to select the normal mode requirement transmission speed G_{REQ}N based on the running state of the vehicle 10 from the normal running gear shift line diagram when the sport mode is selected, and the other condition is the motive-power-prioritized gear shift condition to select the sport mode requirement transmission speed G_{REQ}S based on the running state of the vehicle 10 from the sport running gear shift line diagram when the sport mode is selected. Therefore, for example, when the sport mode is selected, such instructions are both presented to the driver as an instruction about the gear shifting operation to be executed when the sport running normal gear shift condition is satisfied and an instruction about the gear shifting operation to be executed when the motive-power-prioritized gear shift condition is satisfied.

According to the embodiment, when the sport mode is not selected, that is, for example, when the normal mode is selected, such method is used with only the normal gear shift condition employed as the condition, as the normal mode first instruction method of instructing the driver about the gear shifting operation based on the normal gear shift condition (turning on) and, when the power mode is selected, such methods are used with both of the sport running normal gear shift condition and the motive-power-prioritized gear shift condition employed as the conditions, as: an instruction method of instructing the driver about the gear shifting operation based on the sport running normal gear shift condition (normal flickering) and an instruction method of instructing the driver about the gear shifting operation based on the motive-power-prioritized gear shift condition using the gear shifting operation instruction that is different from that used when the sport running normal gear shift condition is satisfied (turning on). Therefore, for example, when the sport mode is selected, such instructions are presented to the driver clearly distinguished from each other, as an instruction about the gear shifting operation to be executed when the sport running normal gear shift condition is satisfied and an instruction about the gear shifting operation to be executed when the motive-power-prioritized gear shift condition is satisfied.

According to the embodiment, the first condition MAP is, for example, the gear shift condition to select the gear shift line requirement transmission speed G_{REQ}M based on the running state of the vehicle 10 from the gear shift line diagram stored in advance and the second condition AI is the gear shift condition to select the AI requirement transmission speed G_{REQ}A based on the information on the road to run for the vehicle 10. Therefore, such instructions are both presented to the driver as an instruction about the gear shifting operation to the gear shift line requirement transmission speed G_{REQ}M and an instruction about the gear shifting operation to the AI requirement transmission speed G_{REQ}A.

According to the embodiment, the information on the road to run for the vehicle 10 is the information on an uphill or a downhill and the second condition AI is the gear shift condition to select as the proper transmission speed the transmission speed set in advance to be suitable for running on an uphill or a downhill. Therefore, for example, when the vehicle 10 is running on an uphill or a downhill, such instructions are both presented to the driver as an instruction about the gear shifting operation to the gear shift line requirement transmission speed G_{REQ}M selected based on the running state of the vehicle 10 from the gear shift line diagram stored in advance and an instruction about the gear shifting operation to the AI requirement transmission speed G_{REQ}A selected based on the information on an uphill or a downhill.

According to the embodiment, the information on the road to run for the vehicle 10 is the information on the road to run from the navigation system 92 mounted on the vehicle 10 and the second condition AI is the gear shift condition to select as the proper transmission speed a transmission speed set in advance to be suitable for running the road to run acquired from the navigation system 92. Therefore, for example, when the vehicle 10 is running on the road to run acquired from the navigation system 92, such instructions are both presented to the driver as an instruction about the gear shifting operation to the gear shift line requirement transmission speed G_{REQ}M selected based on the running state of the vehicle 10 from the gear shift line diagram stored in advance and an instruction about the gear shifting operation to the AI requirement transmission speed G_{REQ}A selected based on the information on the road to run from the navigation system 92.

According to the embodiment, the instruction method of instructing the driver about the gear shifting operation based on the second condition AI is an instruction method of instructing the driver about the gear shifting operation to the AI requirement transmission speed G_{REQ}A using an instruction about the gear shifting operation that more strongly urges the driver to execute the gear shifting operation (quick flickering) compared to the instruction about the gear shifting operation in the instruction method of instructing the driver about the gear shifting operation based on the first condition MAP (turning on). Therefore, such instructions are presented to the driver clearly distinguished from each other, as an instruction about the gear shifting operation to the gear shift line requirement transmission speed G_{REQ}M and an instruction about the gear shifting operation to the AI requirement transmission speed G_{REQ}A.

According to the embodiment, the first condition MAP is, for example, the gear shift condition to select the gear shift line requirement transmission speed G_{REQ}M based on the running state of the vehicle 10 from the gear shift line diagram stored in advance and the second condition HP is the gear shift condition to select the protective requirement transmission speed G_{REQ}H based on the information to protect the apparatuses mounted on the vehicle 10 and engaged in the vehicle's running (for example, the automatic transmission 16 and the engine 12). Therefore, such instructions are both presented to the driver as an instruction about the gear shifting operation to the gear shift line requirement transmission speed G_{REQ}M and an instruction about the gear shifting operation to the protective requirement transmission speed G_{REQ}H.

According to the embodiment, the information to protect the apparatuses engaged in the vehicle's running is the information on the actuating oil temperature T_{OIL} of the automatic transmission 16 and the second condition HP is the gear shift condition to select as the proper transmission speed a transmission speed set in advance such that the actuating oil temperature T_{OIL} is decreased to a temperature lower than the predetermined high oil temperature T_{OILH}. Therefore, for example, when the actuating oil temperature T_{OIL} is equal to the predetermined high oil temperature T_{OILH,} such instructions are both presented to the driver as an instruction about the gear shifting operation to the gear shift line requirement transmission speed G_{REQ}M selected based on the running state of the vehicle 10 from the gear shift line diagram stored in advance and an instruction about the gear shifting operation to the protective requirement transmission speed G_{REQ}H selected based on the information on the actuating oil temperature T_{OIL} of the automatic transmission 16.

According to the embodiment, the information to protect the apparatuses engaged in the vehicle's running is the information on the engine rotation speed N_{E} and the second condition HP is the gear shift condition to select as the proper transmission speed a transmission speed set in advance such that the engine rotation speed N_{E} is not increased to the predetermined excessive rotation speed N_{EOL} set in advance. Therefore, for example, when the engine rotation speed N_{E} is equal to the excessive rotation speed, such instructions are both presented to the driver as an instruction about the gear shifting operation to the gear shift line requirement transmission speed G_{REQ}M selected based on the running state of the vehicle 10 from the gear shift line diagram stored in advance and an instruction about the gear shifting operation to the protective requirement transmission speed G_{REQ}H selected based on the information on the engine rotation speed N_{E}.

According to the embodiment, the instruction method of instructing the driver about the gear shifting operation based on the second condition HP is an instruction method of instructing the driver about the gear shifting operation to the protective requirement transmission speed G_{REQ}H using an instruction about the gear shifting operation that more strongly urges the driver to execute the gear shifting operation (quick flickering) compared to the instruction about the gear shifting operation in the instruction method of instructing the driver about the gear shifting operation based on the first condition MAP (turning on). Therefore, such instructions are presented to the driver clearly distinguished from each other, as an instruction about the gear shifting operation to the gear shift line requirement transmission speed G_{REQ}M and an instruction about the gear shifting operation to the protective requirement transmission speed G_{REQ}H.

According to the embodiment, the gear shift indicating device 30 is included, that has the upshift indicating lamp 44 and the downshift indicating lamp 46, the instructions are indicated about the gear shifting operations to vary the actual transmission speed G_{REAL} to the requirement transmission speed G_{REQ} using only a pair of gear shift indicating devices 30 when the actual transmission speed G_{REAL} and the proper transmission speed (that is, the requirement transmission speed G_{REQ}) of the automatic transmission 16 are different from each other. Therefore, the driver is properly instructed about the gear shifting operation to the requirement transmission speed G_{REQ} without including a plural pairs of gear shift indicating devices 30.

Another embodiment of the present invention will be described. In the description below, components mutually common to the embodiments will be given the same reference letters or numerals and will not again be described.

### Second Embodiment

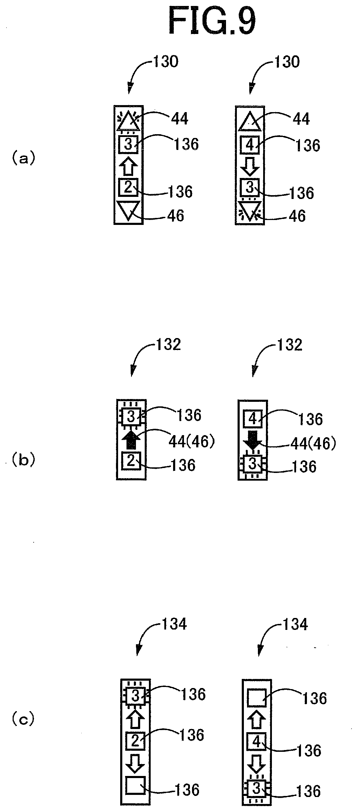

The gear shift indicating device 30 in the first embodiment includes the upshift indicating lamp 44 and the downshift indicating lamp 46 and indicates instructions about gear shifting operations using the shift lever 82 to the driver. In this embodiment, various gear shift indicating devices will be exemplified that each include transmission speed indicating portions 136 to directly indicate explicitly the actual transmission speed G_{REAL} and the requirement transmission speed G_{REQ} instead of the upshift indicating lamp 44 and the downshift indicating lamp 46 or in addition to the upshift indicating lamp 44 and the downshift indicating lamp 46, and that each indicate instructions about gear shifting operations using the shift lever 82 to the driver. Fig. 9 is a diagram exemplifying gear shift indicating devices that are different from the gear shift indicating device 30. In Fig. 9, a gear shift indicating device 130 depicted in (A) includes the transmission speed indicating portions 136 to explicitly indicate the actual transmission speed G_{REAL} and the requirement transmission speed G_{REQ} in addition to the the upshift indicating lamp 44 and the downshift indicating lamp 46. In the gear shift indicating device 130, the transmission speed indicating portion 136 on the side of the upshift indicating lamp 44 or the downshift indicating lamp 46 turned on explicitly indicates the requirement transmission speed G_{REQ} and the transmission speed indicating portion 136 on the side of the lamp turned off explicitly indicates the actual transmission speed G_{REAL}. A gear shift indicating device 132 depicted in (B) includes transmission speed indicating portions 136 to explicitly indicate the actual transmission speed G_{REAL} and the requirement transmission speed G_{REQ} in addition to the the upshift indicating lamp 44 and the downshift indicating lamp 46. In the gear shift indicating device 132: the transmission speed indicating portion 136 turned on explicitly indicates the requirement transmission speed G_{REQ} and the transmission speed indicating portion 136 turned off explicitly indicates the actual transmission speed G_{REAL}; and an arrow inverting its orientation according to upshifting or downshifting corresponds to the upshift indicating lamp 44 and the downshift indicating lamp 46. A gear shift indicating device 134 depicted in (C) includes transmission speed indicating portions 136 to explicitly indicate the actual transmission speed G_{REAL} and the requirement transmission speed G_{REQ} in stead of the the upshift indicating lamp 44 and the downshift indicating lamp 46. In the gear shift indicating device 134, the transmission speed indicating portion 136 turned on explicitly indicates the requirement transmission speed G_{REQ} and the transmission speed indicating portion 136 in the center explicitly indicates the actual transmission speed G_{REAL}. Similarly to the gear shift indicating device 30, only a pair of each of the gear shift indicating devices 130, 132, and 134 is disposed and, in each of (a), (b), and (c) of Fig. 9, the case for instructing a gear shifting operation for upshifting is depicted in the left portion of the page and the case for instructing a gear shifting operation for downshifting is depicted in the right portion of the page.

As above, the embodiments of the present invention have been described in detail with reference to the accompanying drawings. However, the present invention is applicable to other aspects.

For example, in the embodiments, in the instruction method (indication of information) of instructing the driver about the gear shifting operations to the requirement transmission speeds G_{REQ} based on the flags F distinguishing the operations from each other, the indication method of each of the upshift indicating lamp 44 and the downshift indicating lamp 46 is switched among turning off, turning on, and flickering. However, not limiting to this, the indication method may also be switched according to other aspects. For example, the color or the shape of each of the indicating lamps may be switched. When the first instruction method and the second instruction method are used, one instruction method may be executed by turning on the upshift indicating lamp 44 or the downshift indicating lamp 46 and the other instruction method may be executed by, in addition to the turning on, for example, instructing the driver about the gear shifting operations to the requirement transmission speeds G_{REQ} using sounds.

In the embodiments, in the description of the first instruction method and the second instruction method for each of the flags 3 to 6, the upshifting of the automatic transmission 16 associated with an increase of the vehicle speed V and the upshifting based on the normal running upshift line during the accelerated running are described as examples. However, the present invention is also applicable to other aspects. For example, the present invention is also applicable to downshifting associated with slowing-down running with the accelerator pedal released, and downshifting associated with further stepping down of the accelerator pedal.

When the sport mode is selected in the embodiments, for example, for slowing down of the vehicle 10, for example, the timing for turning on the lamp may be set to be earlier to urge the driver to execute downshifting during sudden braking. For example, for inertial running (coasting) on a downhill, the timing for turning on the lamp may be set to be earlier to urge the driver to execute downshifting employing release of the brake, the vehicle speed V, etc., as the conditions. By doing this, the intention for sport running is able to be more strongly reflected when the sport mode is selected.

When the eco mode is selected in the embodiments, for example, the timing to turn on the lamp may also be varied taking into consideration turning on or off of the air conditioner, presence or absence of an electric load, etc. For example, when the air conditioner is turned on or when the electric load is a high load, the timing to turn on the lamp may be set to be earlier to more strongly urge the driver to execute upshifting to reduce more fuel consumption. By doing this, the intention for eco running is able to be more strongly reflected when the eco mode is selected.

In the embodiments, only one pair of each of the gear shift indicating devices 30, 130, 132, and 134 is disposed in the aspects. However, the present invention is applicable to aspects each having a plural pairs of the devices disposed.

In the embodiments, the highest-speed-side transmission speed range is set by the operation for the shift lever 82 to be set at the "S" position (shift range fixation). However, for example, a transmission speed (transmission gear) may be designated based on an operation of the shift lever 82 by an operation for the shift lever 82 to be set at the "M" position that corresponds to the "S" position (transmission gear fixation). In this case, for the automatic transmission 16, the gear shift control is executed such that, for each manual shift operation, a desired transmission speed is set corresponding to the operation. The automatic transmission 16 is a five-forward-transmission-speed transmission. However, the automatic transmission 16 may be a six-forward-transmission-speed transmission, a four-forward-transmission-speed transmission, etc. The automatic transmission 16 may be a continuously variable transmission that is able to continuously vary its gear shift ratio in a step-less form.

In the embodiments, the automatic transmission 16 is exemplified that has a manual gear shift running mode (the manual gear shift mode), as a transmission capable of shifting its transmission speed by execution of the gear shifting operation by the driver. However, in addition to this, for example, a manual transmission may be used as the transmission capable of shifting its transmission speed by execution of the gear shifting operation by the driver.

In the embodiments, the shift lever 82 is disposed for gear shifting operations. However, in stead of the shift lever 82, for example, such items may be disposed as: a switch capable of causing the gear shifting operation to be executed such as a push-button switch or a sliding switch; or an apparatus capable of executing the gear shifting operation by responding to a voice of the driver despite any manual operation; or an apparatus capable of executing the gear shifting operation with an foot operation.

The above is only one embodiment and the present invention is implementable in aspects with various changes and improvements made thereto based on the the following claims.

### Description of Reference Numerals

- 10:: vehicle
- 12:: engine (apparatus engaged in running of the vehicle)
- 16:: automatic transmission (transmission, apparatus engaged in running of the vehicle)
- 30, 130, 132,134:: gear shift indicating device
- 44:: upshift indicating lamp
- 46:: downshift indicating lamp
- 52:: gear shift indicator for a vehicle
- 92:: navigation system

## Claims

1. A gear shift indicator (52) for a vehicle (10) having a transmission (16) whose transmission speed or transmission speed range is shifted by a gear shifting operation by a driver, said gear shift indicator instructing the driver about a gear shifting operation to a proper transmission speed or a transmission speed range serially set, comprising:
a gear shift indicating device (30, 130, 132, 134) having only one upshift indicating lamp (44) to instruct the driver about upshifting and only one downshift indicating lamp (46) to instruct the driver about downshifting each,
the gear shift indicator is configured to indicate an instruction about a gear shift operation to vary an actual transmission speed or transmission speed range to the proper transmission speed or transmission speed range using only one of the two indicating lamps (44, 46) when the actual transmission speed or transmission speed range of the transmission and the proper transmission speed or transmission speed range are different from each other, and **characterized in that**
when only one of a first condition and a second condition different from the first condition is employed as a condition, the gear shift indicator is configured to instruct the driver on the gear shifting operation to vary to the proper transmission speed or transmission speed range on the basis of the only one of the first condition and the second condition using a single instruction method, while when the first condition and the second condition are both employed as conditions, the gear shift indicator is configured to instruct the driver on the gear shifting operation to vary each to the proper transmission speed or transmission speed range on the basis of each of the first condition and the second condition using each instruction method different from each other, and based on the two different conditions using only one of the two indicating lamps.

2. The gear shift indicator (52) for a vehicle (10) of claim 1, wherein
the first condition and the second condition are both conditions to instruct upshifting or are both conditions to instruct downshifting.

3. The gear shift indicator (52) for a vehicle (10) of claim 2, wherein
the second condition is a gear shift condition to select, based on a running state of the vehicle, as the proper transmission speed or transmission speed range, a transmission speed or a transmission speed range set in advance such that a transmission speed or a transmission speed range on a low gear ratio side tends to be selected compared to the proper transmission speed or transmission speed range selected based on the first condition.

4. The gear shift indicator (52) for a vehicle (10) of claim 2, wherein
one condition of the first condition and the second condition is a normal gear shift condition to select, based on a running state of the vehicle, as the proper transmission speed or transmission speed range, a transmission speed or a transmission speed range set in advance such that driving is enabled with high fuel efficiency and motive power performance of the vehicle fully extracted when an eco mode is selected, and wherein
the other condition of the first condition and the second condition is a fuel-efficiency-prioritized gear shift condition to select, based on a running state of the vehicle, as the proper transmission speed or transmission speed range, a transmission speed or a transmission speed range set in advance such that fuel efficiency performance is prioritized to motive power performance when the eco mode is selected.

5. The gear shift indicator (52) for a vehicle (10) of claim 4, wherein
an instruction method is used of instructing the driver about the gear shifting operation based on the normal gear shift condition in a running state satisfying the normal gear shift condition only employing the normal gear shift condition as a condition when the eco mode is not selected, and wherein
when the eco mode is selected, employing both of the normal gear shift condition and the fuel-efficiency-prioritized gear shift condition as conditions, such instruction methods are used, as an instruction method of instructing the driver about the gear shifting operation based on the normal gear shift condition in a running state satisfying the normal gear shift condition, and an instruction method of instructing the driver about the gear shifting operation based on the fuel-efficiency-prioritized gear shift condition using an instruction about the gear shifting operation different from that used when the normal gear shift condition is satisfied, in a running state satisfying the fuel-efficiency-prioritized gear shift condition.

6. The gear shift indicator (52) for a vehicle (10) of claim 2, wherein
one condition of the first condition and the second condition is a normal gear shift condition to select, based on a running state of the vehicle, as the proper transmission speed or transmission speed range, a transmission speed or a transmission speed range set in advance such that driving is enabled with high fuel efficiency and motive power performance of the vehicle fully extracted when a power mode is selected, and wherein
the other condition of the first condition and the second condition is a motive-power-prioritized gear shift condition to select, based on a running state of the vehicle, as the proper transmission speed or transmission speed range, a transmission speed or a transmission speed range set in advance such that the motive power performance is prioritized to fuel efficiency performance when the power mode is selected.

7. The gear shift indicator (52) for a vehicle (10) of claim 6, wherein
an instruction method is used of instructing the driver about the gear shifting operation based on the normal gear shift condition in a running state satisfying the normal gear shift condition employing only the normal gear shift condition as a condition when the power mode is not selected, and wherein
when the power mode is selected, employing both of the normal gear shift condition and the motive-power-prioritized gear shift condition as conditions, such instruction methods are used as, an instruction method of instructing the driver about the gear shifting operation based on the normal gear shift condition in a running state satisfying the normal gear shift condition, and an instruction method of instructing the driver about the gear shifting operation based on the motive-power-prioritized gear shift condition using an instruction about the gear shifting operation different from that used when the normal gear shift condition is satisfied, in a running state satisfying the motive-power-prioritized gear shift condition.

8. The gear shift indicator (52) for a vehicle (10) of claim 1, wherein
the first condition is a gear shift condition to select the proper transmission speed or transmission speed range based on a running state of the vehicle from a relation stored in advance, and wherein
the second condition is a gear shift condition to select the proper transmission speed or transmission speed range based on information on a road to run for the vehicle.

9. The gear shift indicator (52) for a vehicle (10) of claim 8, wherein
the information on a road to run for the vehicle is information on an uphill or a downhill, and wherein
the second condition is a gear shift condition to select as the proper transmission speed or transmission speed range a transmission speed or a transmission speed range set in advance to be suitable for running on the uphill or the downhill.

10. The gear shift indicator (52) for a vehicle (10) of claim 8, wherein
the information on a road to run for the vehicle is information on a road to run from a navigation system (92) mounted on the vehicle, and wherein
the second condition is a gear shift condition to select as the proper transmission speed or transmission speed range a transmission speed or a transmission speed range set in advance to be suitable for running on the road to run acquired from the navigation system.

11. The gear shift indicator (52) for a vehicle (10) of any one of claims 8 to 10, wherein
an instruction method of instructing the driver about the gear shifting operation based on the second condition in a running state satisfying the second condition is an instruction method of instructing the driver about the gear shifting operation using an instruction about a gear shifting operation more strongly urging the driver to execute the gear shifting operation compared to the instruction about the gear shifting operation in the instruction method of instructing the driver about the gear shifting operation based on the first condition in a running state satisfying the first condition.

12. The gear shift indicator (52) for a vehicle (10) of claim 1, wherein
the first condition is a gear shift condition to select the proper transmission speed or transmission speed range based on a running state of the vehicle from a relation stored in advance, and wherein
the second condition is a gear shift condition to select the proper transmission speed or transmission speed range based on information to protect an apparatus mounted on the vehicle and engaged in running of the vehicle.

13. The gear shift indicator (52) for a vehicle (10) of claim 12, wherein
the information to protect the apparatus engaged in running of the vehicle is information on an actuating oil temperature of the transmission (16), and wherein
the second condition is a gear shift condition to select as the proper transmission speed or transmission speed range a transmission speed or a transmission speed range set in advance to decrease the actuating oil temperature to a temperature lower than a predetermined high oil temperature set in advance.

14. The gear shift indicator (52) for a vehicle (10) of claim 12, wherein
the information to protect the apparatus engaged in running of the vehicle is information on an engine rotation speed, and wherein
the second condition is a gear shift condition to select as the proper transmission speed or transmission speed range a transmission speed or a transmission speed range set in advance to prevent the engine rotation speed from increasing to a predetermined excessive rotation speed set in advance.

15. The gear shift indicator (52) for a vehicle (10) of any one of claims 12 to 14, wherein
an instruction method of instructing the driver about the gear shifting operation based on the second condition in a running state satisfying the second condition is an instruction method of instructing the driver about the gear shifting operation using an instruction about a gear shifting operation more strongly urging the driver to execute the gear shifting operation compared to the instruction about the gear shifting operation in the instruction method of instructing the driver about the gear shifting operation based on the first condition in a running state satisfying the first condition.

## Patentansprüche

1. Gangschaltungsanzeiger (52) für ein Fahrzeug (10) mit einem Getriebe (16), dessen Übersetzung oder Übersetzungsbereich durch einen Gangschaltvorgang von einem Fahrer geschaltet wird, wobei der Gangschaltungsanzeiger den Fahrer zu einem Gangschaltvorgang in eine geeignete, seriell gewählte, Übersetzung oder einen geeigneten, seriell gewählten, Übersetzungsbereich anweist, der aufweist:
eine Gangschaltungsanzeigevorrichtung (30, 130, 132, 134) mit nur einer Hochschaltanzeigelampe (44), die den Fahrer zum Hochschalten anweist, und nur einer
Herunterschaltanzeigelampe (46), die den Fahrer zum Herunterschalten anweist,
wobei der Gangschaltungsanzeiger so konfiguriert ist, dass er eine Anweisung zu einem Gangschaltvorgang anzeigt, um unter Verwendung nur einer der zwei Anzeigelampen (44, 46) eine tatsächliche Übersetzung oder einen tatsächlichen Übersetzungsbereich in die geeignete Übersetzung oder den geeigneten Übersetzungsbereich zu schalten, wenn sich die tatsächliche Übersetzung oder der tatsächliche Übersetzungsbereich des Getriebes von der geeigneten Übersetzung oder dem geeigneten Übersetzungsbereich unterscheiden, und **dadurch gekennzeichnet ist, dass**
wenn nur eine einer ersten Bedingung und einer von der ersten Bedingung unterschiedlichen zweiten Bedingung als eine Bedingung verwendet wird, der Gangschaltungsanzeiger so konfiguriert ist, dass er auf der Grundlage nur der einen der ersten Bedingung und zweiten Bedingung unter Verwendung eines einzigen Anweisungsverfahrens den Fahrer zum Gangschaltvorgang anweist, in die geeignete Übersetzung oder den geeigneten Übersetzungsbereich zu schalten, und wenn sowohl die erste Bedingung als auch die zweite Bedingung als Bedingungen verwendet werden, der Gangschaltungsanzeiger so konfiguriert ist, dass er auf der Grundlage der ersten Bedingung und der zweiten Bedingung unter Verwendung unterschiedlicher Anweisungsverfahren und basierend auf den zwei unterschiedlichen Bedingungen unter Verwendung nur einer der beiden Anzeigelampen den Fahrer zum Gangschaltvorgang anweist, in die geeignete Übersetzung oder den geeigneten Übersetzungsbereich zu schalten.

2. Gangschaltungsanzeiger (52) für ein Fahrzeug (10) nach Anspruch 1, wobei
die erste Bedingung und die zweite Bedingung beide Bedingungen sind, die zum Hochschalten anweisen oder beide Bedingungen sind, die zum Herunterschalten anweisen.

3. Gangschaltungsanzeiger (52) für ein Fahrzeug (10) nach Anspruch 2, wobei
die zweite Bedingung eine Gangschaltbedingung ist, um basierend auf einem Betriebszustand des Fahrzeugs eine vorher eingestellte Übersetzung oder einen vorher eingestellten Übersetzungsbereich als die geeignete Übersetzung oder den geeigneten Übersetzungsbereich so zu wählen, dass eine Übersetzung oder ein Übersetzungsbereich auf einer Seite eines niedrigen Übersetzungsverhältnisses eher gewählt wird als die basierend auf der ersten Bedingung geeignete gewählte Übersetzung oder der geeignete gewählte Übersetzungsbereich.

4. Gangschaltungsanzeiger (52) für ein Fahrzeug (10) nach Anspruch 2, wobei
eine Bedingung der ersten Bedingung und der zweiten Bedingung eine normale Gangschaltbedingung ist, um basierend auf dem Betriebszustand des Fahrzeugs eine vorher eingestellte Übersetzung oder einen vorher eingestellten Übersetzungsbereich als die geeignete Übersetzung oder den geeigneten Übersetzungsbereich so zu wählen, dass das Fahren mit einer hohen Kraftstoffeffizienz und einer vollständig ausgenutzten Antriebsleistung des Fahrzeugs ermöglicht ist, wenn ein Eco-Modus gewählt ist, und wobei
die andere Bedingung der ersten Bedingung und der zweiten Bedingung eine Kraftstoffeffizienz priorisierende Gangschaltbedingung ist, um basierend auf dem Betriebszustand des Fahrzeugs eine vorher eingestellte Übersetzung oder einen vorher eingestellten Übersetzungsbereich als die geeignete Übersetzung oder den geeigneten Übersetzungsbereich so zu wählen, dass eine Kraftstoffeffizienzleistung der Antriebsleistung vorgezogen wird, wenn der Eco-Modus gewählt ist.

5. Gangschaltungsanzeiger (52) für ein Fahrzeug (10) nach Anspruch 4, wobei
ein Anweisungsverfahren verwendet wird, das den Fahrer in einem Betriebszustand, bei dem die normale Gangschaltbedingung erfüllt ist, zu dem auf der normalen Gangschaltbedingung basierenden Gangschaltvorgang anweist, wobei nur die normale Gangschaltbedingung als eine Bedingung verwendet wird, wenn der Eco-Modus nicht gewählt ist, und wobei
wenn der Eco-Modus gewählt ist, unter Verwendung sowohl der normalen Gangschaltbedingung als auch der Kraftstoffeffizienz priorisierenden Gangschaltbedingung als Bedingungen, in einem Betriebszustand, bei dem die die Kraftstoffeffizienz priorisierende Gangschaltbedingung erfüllt ist, ein Anweisungsverfahren verwendet wird, das den Fahrer zu dem auf der normalen Gangschaltbedingung basierenden Gangschaltvorgang in einem Betriebszustand, der die normale Gangschaltbedingung erfüllt, anweist, und ein Anweisungsverfahren verwendet wird, das den Fahrer zu dem auf der Kraftstoffeffizienz priorisierenden Gangschaltbedingung basierenden Gangschaltvorgang unter Verwendung einer Anweisung auf den Gangschaltvorgang anweist, die sich von der unterscheidet, die verwendet wird, wenn die normale Gangschaltbedingung erfüllt ist.

6. Gangschaltungsanzeiger (52) für ein Fahrzeug (10) nach Anspruch 2, wobei
eine Bedingung der ersten Bedingung und der zweiten Bedingung eine normale Gangschaltbedingung ist, um basierend auf dem Betriebszustand des Fahrzeugs eine vorher eingestellte Übersetzung oder einen vorher eingestellten Übersetzungsbereich als die geeignete Übersetzung oder den geeigneten Übersetzungsbereich so zu wählen, dass das Fahren mit einer hohen Kraftstoffeffizienz und einer vollständig ausgenutzten Antriebsleistung des Fahrzeugs ermöglicht ist, wenn ein Power-Modus gewählt ist, und wobei
die andere Bedingung der ersten Bedingung und der zweiten Bedingung eine Antriebsleistung priorisierende Gangschaltbedingung ist, um basierend auf einem Betriebszustand des Fahrzeugs eine vorher eingestellte Übersetzung oder einen vorher eingestellten Übersetzungsbereich als die geeignete Übersetzung oder den geeigneten Übersetzungsbereich so zu wählen, dass die Antriebsleistung der Kraftstoffeffizienzleistung vorgezogen wird, wenn der Power-Modus gewählt ist.

7. Gangschaltungsanzeiger (52) für ein Fahrzeug (10) nach Anspruch 6, wobei
ein Anweisungsverfahren verwendet wird, das den Fahrer in einem Betriebszustand, bei dem die normale Gangschaltbedingung erfüllt ist, zu dem auf der normalen Gangschaltbedingung basierenden Gangschaltvorgang anweist, wobei nur die normale Gangschaltbedingung als eine Bedingung verwendet wird, wenn der Power-Modus nicht gewählt ist, und wobei
wenn der Power-Modus gewählt ist, unter Verwendung sowohl der normalen Gangschaltbedingung als auch der Antriebsleistung priorisierenden Gangschaltbedingung als Bedingungen, in einem Betriebszustand, bei dem die die Antriebsleistung priorisierende Gangschaltbedingung erfüllt ist, ein Anweisungsverfahren verwendet wird, das den Fahrer zu dem auf der normalen Gangschaltbedingung basierenden Gangschaltvorgang in einem Betriebszustand, der die normale Gangschaltbedingung erfüllt, anweist, und ein Anweisungsverfahren verwendet wird, das den Fahrer zu dem auf der Antriebsleistung priorisierenden Gangschaltbedingung basierenden Gangschaltvorgang unter Verwendung einer Anweisung auf den Gangschaltvorgang anweist, die sich von der unterscheidet, die verwendet wird, wenn die normale Gangschaltbedingung erfüllt ist.

8. Gangschaltungsanzeiger (52) für ein Fahrzeug (10) nach Anspruch 1, wobei
die erste Bedingung eine Gangschaltbedingung ist, um basierend auf einem Betriebszustand des Fahrzeugs von einem vorher gespeicherten Zusammenhang in die geeignete Übersetzung oder den geeignete Übersetzungsbereich zu schalten, und wobei
die zweite Bedingung eine Gangschaltbedingung ist, um basierend auf Informationen der Straße, auf der das Fahrzeug fährt, in die geeignete Übersetzung oder den geeigneten Übersetzungsbereich zu schalten.

9. Gangschaltungsanzeiger (52) für ein Fahrzeug (10) nach Anspruch 8, wobei
die Informationen der Straße, auf der das Fahrzeug fährt, Informationen über eine Bergauffahrt oder eine Bergabfahrt sind, und wobei
die zweite Bedingung eine Gangschaltbedingung ist, um als die geeignete Übersetzung oder den geeigneten Übersetzungsbereich eine vorher eingestellte Übersetzung oder einen vorher eingestellten Übersetzungsbereich zu wählen, die/der für die Bergauffahrt oder die Bergabfahrt geeignet ist.

10. Gangschaltungsanzeiger (52) für ein Fahrzeug (10) nach Anspruch 8, wobei
die Informationen der Straße, auf der das Fahrzeug fährt, Informationen der Straße von einem am Fahrzeug befestigten Navigationssystem (92) sind, und wobei
die zweite Bedingung eine Gangschaltbedingung ist, um als die geeignete Übersetzung oder den geeigneten Übersetzungsbereich eine vorher eingestellte Übersetzung oder einen vorher eingestellten Übersetzungsbereich zu wählen, die/der zum Fahren auf der vom Navigationssystem erfassten Straße geeignet ist.

11. Gangschaltungsanzeiger (52) für ein Fahrzeug (10) nach einem der Ansprüche 8 bis 10, wobei
ein Anweisungsverfahren, das den Fahrer zu dem auf der zweiten Bedingung basierenden Gangschaltvorgang in einem Betriebszustand, der die zweite Bedingung erfüllt, anweist, ein Anweisungsverfahren ist, das den Fahrer unter Verwendung einer Anweisung zum Gangschaltvorgang, die den Fahrer, verglichen mit der Anweisung zum Gangschaltvorgang bei dem Anweisungsverfahren, das den Fahrer zu dem auf der ersten Bedingung basierenden Gangschaltvorgang in einem Betriebszustand, der die erste Bedingung erfüllt, anweist, stärker dazu drängt, den Gangschaltvorgang durchzuführen, zu dem Gangschaltvorgang anweist.

12. Gangschaltungsanzeiger (52) für ein Fahrzeug (10) nach Anspruch 8, wobei
die erste Bedingung eine Gangschaltbedingung ist, um basierend auf einem Betriebszustand des Fahrzeugs von einem vorher gespeicherten Zusammenhang in die geeignete Übersetzung oder den geeigneten Übersetzungsbereich zu schalten, und wobei
die zweite Bedingung eine Gangschaltbedingung ist, um basierend auf Informationen in die geeignete Übersetzung oder den geeigneten Übersetzungsbereich zu schalten, um eine am Fahrzeug befestigte und beim Betrieb des Fahrzeugs eingesetzte Vorrichtung zu schützen.

13. Gangschaltungsanzeiger (52) für ein Fahrzeug (10) nach Anspruch 12, wobei
die Informationen, die die beim Betrieb des Fahrzeugs eingesetzte Vorrichtung schützen, Informationen über die Ölbetriebstemperatur des Getriebes (16) sind, und wobei
die zweite Bedingung eine Gangschaltbedingung ist, um als die geeignete Übersetzung oder den geeigneten Übersetzungsbereich eine vorher eingestellte Übersetzung oder einen vorher eingestellten Übersetzungsbereich zu wählen, um die Ölbetriebstemperatur auf eine Temperatur zu senken, die niedriger als eine vorher eingestellte vorgegebene Ölhöchsttemperatur ist.

14. Gangschaltungsanzeiger (52) für ein Fahrzeug (10) nach Anspruch 12, wobei
die Informationen, die die beim Betrieb des Fahrzeugs eingesetzte Vorrichtung schützen, Informationen über die Motordrehzahl sind, und wobei
die zweite Bedingung eine Gangschaltbedingung ist, um als die geeignete Übersetzung oder den geeigneten Übersetzungsbereich eine vorher eingestellte Übersetzung oder einen vorher eingestellten Übersetzungsbereich zu wählen, um zu verhindern, dass sich die Motordrehzahl auf eine vorher eingestellte vorgegebene Höchstdrehzahl erhöht.

15. Gangschaltungsanzeiger (52) für ein Fahrzeug (10) nach einem der Ansprüche 12 bis 14, wobei
ein Anweisungsverfahren, das den Fahrer zu dem auf der zweiten Bedingung basierenden Gangschaltvorgang in einem Betriebszustand, der die zweite Bedingung erfüllt, anweist, ein Anweisungsverfahren ist, das den Fahrer unter Verwendung einer Anweisung zum Gangschaltvorgang, die den Fahrer, verglichen mit der Anweisung zum Gangschaltvorgang bei dem Anweisungsverfahren, das den Fahrer zu dem auf der ersten Bedingung basierenden Gangschaltvorgang in einem Betriebszustand, der die erste Bedingung erfüllt, anweist, stärker dazu drängt, den Gangschaltvorgang durchzuführen, zu dem Gangschaltvorgang anweist.

## Revendications

1. Indicateur de changement de rapport (52) pour un véhicule (10) comportant une transmission (16) dont la vitesse de transmission ou la plage de vitesses de transmission est changée par le biais d'une opération de changement de rapport effectuée par un conducteur, ledit indicateur de changement de rapport communiquant une instruction au conducteur se rapportant à une opération de changement de rapport visant à passer à une vitesse de transmission ou une plage de vitesses de transmission appropriée établie en série, comprenant :
un dispositif d'indication de changement de rapport (30, 130, 132, 134) comportant un seul voyant d'indication de passage à un rapport supérieur (44) destiné à communiquer une instruction au conducteur se rapportant au passage à un rapport supérieur et un seul voyant d'indication de passage à un rapport inférieur (46) destiné à communiquer une instruction au conducteur se rapportant au passage à un rapport inférieur, respectivement,
l'indicateur de changement de rapport étant configuré pour communiquer une instruction se rapportant à une opération de changement de rapport visant à passer d'une vitesse de transmission ou d'une plage de vitesses de transmission existante à la vitesse de transmission ou la plage de vitesses de transmission appropriée au moyen d'un seul des deux voyants d'indication (44, 46) lorsque la vitesse de transmission ou la plage de vitesses de transmission existante de la transmission et la vitesse de transmission ou la plage de vitesses de transmission appropriée diffèrent l'une de l'autre, et **caractérisé en ce que**
lorsqu'une seule condition, parmi une première condition et une seconde condition différente de la première condition, est employée en tant que condition, l'indicateur de changement de rapport est configuré pour communiquer une instruction au conducteur se rapportant à l'opération de changement de rapport visant à passer à la vitesse de transmission ou la plage de vitesses de transmission appropriée en fonction d'une seule condition parmi la première condition et la seconde condition au moyen d'un seul procédé de communication d'instruction, tandis que lorsque la première condition et la seconde condition sont toutes les deux employées en tant que conditions, l'indicateur de changement de rapport est configuré pour communiquer une instruction au conducteur se rapportant à l'opération de changement de rapport visant à passer respectivement à la vitesse de transmission ou la plage de vitesses de transmission appropriée en fonction de chacune de la première condition et la seconde condition au moyen de procédés de communication d'instruction respectifs différents l'un de l'autre, et en fonction des deux conditions différentes au moyen d'un seul des deux voyants d'indication.

2. Indicateur de changement de rapport (52) pour un véhicule (10) selon la revendication 1, dans lequel
la première condition et la seconde condition sont toutes les deux des conditions pour la communication d'une instruction de passage à un rapport supérieur ou sont toutes les deux des conditions pour la communication d'une instruction de passage à un rapport inférieur.

3. Indicateur de changement de rapport (52) pour un véhicule (10) selon la revendication 2, dans lequel
la seconde condition est une condition de changement de rapport pour la sélection, en fonction d'un état de fonctionnement du véhicule, en tant que vitesse de transmission ou plage de vitesses de transmission appropriée, d'une vitesse de transmission ou d'une plage de vitesses de transmission établie à l'avance de telle sorte qu'une vitesse de transmission ou une plage de vitesses de transmission d'un côté de rapports de vitesse inférieurs tende à être sélectionnée par comparaison avec la vitesse de transmission ou la plage de vitesses de transmission appropriée sélectionnée sur la base de la première condition.

4. Indicateur de changement de rapport (52) pour un véhicule (10) selon la revendication 2, dans lequel
une condition, parmi la première condition et la seconde condition, est une condition de changement de rapport normale pour la sélection, en fonction d'un état de fonctionnement du véhicule, en tant que vitesse de transmission ou plage de vitesses de transmission appropriée, d'une vitesse de transmission ou d'une plage de vitesses de transmission établie à l'avance de telle sorte qu'une conduite avec un rendement énergétique élevé et une performance de puissance motrice maximale du véhicule soit possible lorsqu'un mode éco est sélectionné, et dans lequel l'autre condition, parmi la première condition et la seconde condition, est une condition de changement de rapport de priorité du rendement énergétique pour la sélection, en fonction d'un état de fonctionnement du véhicule, en tant que vitesse de transmission ou plage de vitesses de transmission appropriée, d'une vitesse de transmission ou d'une plage de vitesses de transmission établie à l'avance de telle sorte qu'une performance de rendement énergétique ait la priorité par rapport à une performance de puissance motrice lorsque le mode éco est sélectionné.

5. Indicateur de changement de rapport (52) pour un véhicule (10) selon la revendication 4, dans lequel
un procédé de communication d'instruction est utilisé pour communiquer au conducteur une instruction se rapportant à l'opération de changement de rapport sur la base de la condition de changement de rapport normale dans un état de fonctionnement satisfaisant la condition de changement de rapport normale, dans le cas où seule la condition de changement de rapport normale est employée en tant que condition lorsque le mode éco n'est pas sélectionné, et dans lequel lorsque le mode éco est sélectionné, dans le cas où à la fois la condition de changement de rapport normale et la condition de changement de rapport de priorité du rendement énergétique sont employées en tant que conditions, sont utilisés des procédés de communication d'instruction tels qu'un procédé de communication d'instruction pour communiquer au conducteur une instruction se rapportant à l'opération de changement de rapport sur la base de la condition de changement de rapport normale dans un état de fonctionnement satisfaisant la condition de changement de rapport normale et qu'un procédé de communication d'instruction pour communiquer au conducteur une instruction se rapportant à l'opération de changement de rapport sur la base de la condition de changement de rapport de priorité du rendement énergétique, au moyen d'une instruction se rapportant à l'opération de changement de rapport différente de celle qui est utilisée lorsque la condition de changement de rapport normale est satisfaite, dans un état de fonctionnement satisfaisant la condition de changement de rapport de priorité du rendement énergétique.

6. Indicateur de changement de rapport (52) pour un véhicule (10) selon la revendication 2, dans lequel
une condition, parmi la première condition et la seconde condition, est une condition de changement de rapport normale pour la sélection, en fonction d'un état de fonctionnement du véhicule, en tant que vitesse de transmission ou plage de vitesses de transmission appropriée, d'une vitesse de transmission ou d'une plage de vitesses de transmission établie à l'avance de telle sorte qu'une conduite avec un rendement énergétique élevé et une performance de puissance motrice maximale du véhicule soit possible lorsqu'un mode puissance est sélectionné, et dans lequel l'autre condition, parmi la première condition et la seconde condition, est une condition de changement de rapport de priorité de la puissance motrice pour la sélection, en fonction d'un état de fonctionnement du véhicule, en tant que vitesse de transmission ou plage de vitesses de transmission appropriée, d'une vitesse de transmission ou d'une plage de vitesses de transmission établie à l'avance de telle sorte qu'une performance de puissance motrice ait la priorité par rapport à une performance de rendement énergétique lorsque le mode puissance est sélectionné.

7. Indicateur de changement de rapport (52) pour un véhicule (10) selon la revendication 6, dans lequel
un procédé de communication d'instruction est utilisé pour communiquer au conducteur une instruction se rapportant à l'opération de changement de rapport sur la base de la condition de changement de rapport normale dans un état de fonctionnement satisfaisant la condition de changement de rapport normale, dans le cas où seule la condition de changement de rapport normale est employée en tant que condition lorsque le mode puissance n'est pas sélectionné, et dans lequel
lorsque le mode puissance est sélectionné, dans le cas où à la fois la condition de changement de rapport normale et la condition de changement de rapport de priorité de la puissance motrice sont employées en tant que conditions, sont utilisés des procédés de communication d'instruction tels qu'un procédé de communication d'instruction pour communiquer au conducteur une instruction se rapportant à l'opération de changement de rapport sur la base de la condition de changement de rapport normale dans un état de fonctionnement satisfaisant la condition de changement de rapport normale et qu'un procédé de communication d'instruction pour communiquer au conducteur une instruction se rapportant à l'opération de changement de rapport sur la base de la condition de changement de rapport de priorité de la puissance motrice, au moyen d'une instruction se rapportant à l'opération de changement de rapport différente de celle qui est utilisée lorsque la condition de changement de rapport normale est satisfaite, dans un état de fonctionnement satisfaisant la condition de changement de rapport de priorité de la puissance motrice.

8. Indicateur de changement de rapport (52) pour un véhicule (10) selon la revendication 1, dans lequel
la première condition est une condition de changement de rapport pour la sélection de la vitesse de transmission ou de la plage de vitesses de transmission appropriée, en fonction d'un état de fonctionnement du véhicule, sur la base d'une relation mémorisée à l'avance, et dans lequel la seconde condition est une condition de changement de rapport pour la sélection de la vitesse de transmission ou de la plage de vitesses de transmission appropriée sur la base d'informations sur une route destinée à être parcourue par le véhicule.

9. Indicateur de changement de rapport (52) pour un véhicule (10) selon la revendication 8, dans lequel
les informations sur une route destinée à être parcourue par le véhicule sont des informations se rapportant à une route à dénivelé positif ou une route à dénivelé négatif, et dans lequel la seconde condition est une condition de changement de rapport pour la sélection, en tant que vitesse de transmission ou plage de vitesses de transmission appropriée, d'une vitesse de transmission ou d'une plage de vitesses de transmission établie à l'avance comme appropriée pour parcourir la route à dénivelé positif ou la route à dénivelé négatif.

10. Indicateur de changement de rapport (52) pour un véhicule (10) selon la revendication 8, dans lequel
les informations sur une route destinée à être parcourue par le véhicule sont des informations se rapportant à une route destinée à être parcourue provenant d'un système de navigation (92) installé sur le véhicule, et dans lequel
la seconde condition est une condition de changement de rapport pour la sélection, en tant que vitesse de transmission ou plage de vitesses de transmission appropriée, d'une vitesse de transmission ou d'une plage de vitesses de transmission établie à l'avance comme appropriée pour parcourir la route destinée à être parcourue obtenue du système de navigation.

11. Indicateur de changement de rapport (52) pour un véhicule (10) selon l'une quelconque des revendications 8 à 10, dans lequel
un procédé de communication d'instruction pour communiquer au conducteur une instruction se rapportant à l'opération de changement de rapport sur la base de la seconde condition, dans un état de fonctionnement satisfaisant la seconde condition, est un procédé de communication d'instruction pour communiquer au conducteur une instruction se rapportant à l'opération de changement de rapport au moyen d'une instruction se rapportant à une opération de changement de rapport invitant plus vivement le conducteur à exécuter l'opération de changement de rapport, par comparaison avec l'instruction se rapportant à l'opération de changement de rapport dans le procédé de communication d'instruction pour communiquer une instruction au conducteur se rapportant à l'opération de changement de rapport sur la base de la première condition, dans un état de fonctionnement satisfaisant la première condition.

12. Indicateur de changement de rapport (52) pour un véhicule (10) selon la revendication 1, dans lequel
la première condition est une condition de changement de rapport pour la sélection de la vitesse de transmission ou de la plage de vitesses de transmission appropriée, en fonction d'un état de fonctionnement du véhicule, sur la base d'une relation mémorisée à l'avance, et dans lequel la seconde condition est une condition de changement de rapport pour la sélection de la vitesse de transmission ou de la plage de vitesses de transmission appropriée sur la base d'informations visant à protéger un appareil installé sur le véhicule et participant au fonctionnement du véhicule.

13. Indicateur de changement de rapport (52) pour un véhicule (10) selon la revendication 12, dans lequel
les informations visant à protéger l'appareil participant au fonctionnement du véhicule sont des informations se rapportant à une température de l'huile en service de la transmission (16), et dans lequel
la seconde condition est une condition de changement de rapport pour la sélection, en tant que vitesse de transmission ou plage de vitesses de transmission appropriée, d'une vitesse de transmission ou d'une plage de vitesses de transmission établie à l'avance afin de diminuer la température de l'huile en service jusqu'à une température inférieure à une température de l'huile élevée prédéterminée établie à l'avance.

14. Indicateur de changement de rapport (52) pour un véhicule (10) selon la revendication 12, dans lequel
les informations visant à protéger l'appareil participant au fonctionnement du véhicule sont des informations se rapportant à un régime du moteur, et dans lequel
la seconde condition est une condition de changement de rapport pour la sélection, en tant que vitesse de transmission ou plage de vitesses de transmission appropriée, d'une vitesse de transmission ou d'une plage de vitesses de transmission établie à l'avance afin d'empêcher une augmentation du régime du moteur jusqu'à un régime du moteur excessif prédéterminé établi à l'avance.

15. Indicateur de changement de rapport (52) pour un véhicule (10) selon l'une quelconque des revendications 12 à 14, dans lequel un procédé de communication d'instruction pour communiquer au conducteur une instruction se rapportant à l'opération de changement de rapport sur la base de la seconde condition, dans un état de fonctionnement satisfaisant la seconde condition, est un procédé de communication d'instruction pour communiquer au conducteur une instruction se rapportant à l'opération de changement de rapport au moyen d'une instruction se rapportant à une opération de changement de rapport invitant plus vivement le conducteur à exécuter l'opération de changement de rapport, par comparaison avec l'instruction se rapportant à l'opération de changement de rapport dans le procédé de communication d'instruction pour communiquer une instruction au conducteur se rapportant à l'opération de changement de rapport sur la base de la première condition, dans un état de fonctionnement satisfaisant la première condition.
